(19) Europäisches Patentamt
European Patent Office
Office européen des brevets

(11) EP 1 094 083 A2

(12) EUROPEAN PATENT APPLICATION

(43) Date of publication:
**25.04.2001 Bulletin 2001/17**

(21) Application number: **00121353.7**

(22) Date of filing: **11.10.2000**

(51) Int. Cl.$^7$: **C08F 4/646**, C08F 4/658, C08F 10/06, C08F 297/08, C08F 210/16

(84) Designated Contracting States:
**AT BE CH CY DE DK ES FI FR GB GR IE IT LI LU MC NL PT SE**
Designated Extension States:
**AL LT LV MK RO SI**

(30) Priority: **19.10.1999 JP 29737099**
**19.10.1999 JP 29737199**
**19.10.1999 JP 29737299**
**19.10.1999 JP 29737399**
**07.01.2000 JP 2000001825**
**07.01.2000 JP 2000001826**

(71) Applicant:
**IDEMITSU PETROCHEMICAL CO. Ltd.**
**Tokyo 130-0015 (JP)**

(72) Inventors:
- **Sadashima, Takanori**
**Ichihara-shi, Chiba 299-0107 (JP)**
- **Katayama, Kiyokazu**
**Ichihara-shi, Chiba 299-0107 (JP)**
- **Obata, Yutaka**
**Ichihara-shi, Chiba 299-0107 (JP)**
- **Ota, Tsuyoshi**
**Ichihara-shi, Chiba 299-0107 (JP)**
- **Funabashi, Hideo**
**Ichihara-shi, Chiba 299-0107 (JP)**

(74) Representative:
**Gille Hrabal Struck Neidlein Prop Roos**
**Patentanwälte**
**Brucknerstrasse 20**
**40593 Düsseldorf (DE)**

# (54) Catalyst for olefin polymerization, method for producing olefin polymer, and olefin polymer

(57) The invention provides a high-activity olefin polymerization catalyst comprising, as an internal donor or an external donor, a specific organosilicon compound. With the catalyst, efficiently produced are (1) olefin polymers having high melt fluidity; (2) propylene-based block copolymers having good moldability, good impact resistance and high stiffness; and (3) non-sticky propylene-ethylene random copolymers capable of being formed into films having good low-temperature heat-sealability and good impact resistance.

EP 1 094 083 A2

## Description

TECHNICAL FIELD

The present invention relates to a catalyst for olefin polymerization, to a method for producing an olefin polymer, and to the olefin polymer. Precisely, the invention relates to a novel catalyst for olefin polymerization having high polymerization activity and capable of giving an olefin polymer having high melt fluidity, in the presence of a small amount of hydrogen, and to the olefin polymer.

The invention also relates to a method for producing a propylene-based block copolymer and to the propylene-based block copolymer produced in the method. Precisely, it relates to a method for producing a propylene-based block copolymer in which the polypropylene component formed has high stereospecificity and its molecular weight and melt flow rate (MFR) can be easily controlled in the presence of a small amount of hydrogen, and the ethylene/propylene copolymer component (rubber component) formed has a high molecular weight, and relates to the propylene-based block copolymer produced in the method.

The invention further relates to a method for producing a propylene-ethylene random copolymer and to the propylene-ethylene random copolymer. Precisely, it relates to a method for producing a propylene-ethylene random copolymer capable of forming non-sticky films having good low-temperature heat-sealability and good impact resistance, and to the propylene-ethylene random copolymer produced in the method.

BACKGROUND ART

(1) Recently, many catalyst systems containing magnesium, titanium, chlorine and an electron donor have been disclosed for polypropylene production. In addition, it is known that using an organoaluminium compound combined with an organosilicon compound having an Si-O-C bonding structure in olefin polymerization gives α-olefin polymers having high stereospecificity. In case where α-olefin polymers are produced in the presence of such catalysts, generally used is a chain transfer agent such as hydrogen or the like along with the catalyst to thereby increase the melt flow rate of the polymers produced. However, the catalyst system containing an organosilicon compound is unfavorable for producing polymers having high melt fluidity, since the melt fluidity of the polymers produced in the presence of it depends little on the amount of hydrogen used (Japanese Patent Laid-Open Nos. 227707/1992, 122716/1994). For example, in a vapor-phase polymerization process for producing polymers having high melt fluidity, a large amount of hydrogen must be used. However, the process is problematic in that the apparatus for it must have high pressure resistance, and that the monomer pressure therein shall be lowered with the increase in the hydrogen pressure therein. Reducing the monomer pressure inevitably lowers the productivity of polymers. Another technique of producing polyolefins in the presence of an organosilicon compound is disclosed in Japanese Patent Laid-Open No. 306115/1994 and International Patent Publication No. 509263/1996. The former is characterized by using a specific aluminoxane, which, however, is expensive and is therefore defective as increasing the cost of products. The latter is for bulk polymerization and is also defective in that the stereospecificity of the polymers produced is low.

As the situation now stands, desired is a method for producing propylene polymers having high stereospecificity of which the molecular weight and the melt flow rate (MFR) can be easily controlled in the presence of hydrogen, and of which the productivity per the catalyst used is high.

The first and second aspects of the present invention have been made in consideration of the matters noted above, and are directed to providing a novel catalyst for olefin polymerization having high polymerization activity and capable of giving olefin polymers having high melt fluidity in the presence of a small amount of hydrogen, to providing a method for producing such olefin polymers, and to providing the olefin polymers.

(2) As well known, propylene polymers include homopolypropylenes having high stiffness and good heat resistance, and propylene-based block copolymers having the characteristics of polypropylene segments and rubber segments and having high stiffness, good heat resistance and high impact resistance. Such propylene polymers have the advantages of low specific gravity, light weight and good recyclability, and are therefore specifically noted from the viewpoint of environmental protection. It is desired to use them for many applications. Heretofore, such propylene polymers are produced in the presence of a so-called Ziegler-Natta catalyst that comprises a transition metal compound of Groups IV to VI of the Periodic Table and an organometallic compound containing a metal of Groups I to III. However, propylene-based block copolymers obtained in the prior art are not always satisfactory in point of their stiffness and heat resistance for some applications, and their use is often limited. To further increase the stiffness and the heat resistance of such propylene-based block copolymers, the stereospecificity of the polypropylene component of the copolymers will have to be increased more. In this connection, it is known to use a catalyst (high-stereospecificity catalyst) capable of giving high-stereospecificity homopolypropylenes in producing propylene-based block copolymers.

However, when an olefin such as propylene or the like is polymerized in the presence of such a high-stereospecificity catalyst, the molecular weight of the polymer produced often increases. Therefore, another problem with such a high-stereospecificity catalyst is that a large amount of hydrogen serving as a chain transfer agent must be added to the catalyst system for controlling the molecular weight and the melt flow rate (MFR) of the polymers produced. In particular, in polymerization of propylene in which the monomer propylene serves also as a solvent, a large amount of hydrogen shall exist in the polymerization system, thereby inevitably increasing the polymerization pressure. Still another problem with it is that the polymerization reactor to be used must have high pressure resistance.

In general, propylene-based block copolymers are produced in multi-stage polymerization for block copolymerization, which comprises first polymerizing propylene to give a polypropylene component followed by copolymerizing ethylene and an α-olefin to give a rubber component. In case where the multi-polymerization is effected in a mode of continuous polymerization, another problem is inevitable in that the copolymers produced could not have good impact resistance. This is because, in such a continuous-mode multi-polymerization process, a large amount of hydrogen first added in the stage of forming the polypropylene component will still remain in the next stage of forming the rubber component, and, as a result, the molecular weight of the rubber component is difficult to increase. Accordingly, it is desired to develop a method for producing propylene-based block copolymers in which the propylene component of the copolymers produced can have an increased degree of stereospecificity and the molecular weight and the melt flow rate (MFR) of the high-stereospecificity propylene component can be easily controlled by hydrogen, and in which the rubber component of the copolymers produced can have an increased molecular weight.

The third and fourth aspects of the present invention have been made in consideration of the matters noted above, and are directed to providing a method for producing propylene-based block copolymers in which the propylene component of the copolymers produced can have an increased degree of stereospecificity and the molecular weight and the melt flow rate (MFR) of the high-stereospecificity propylene component can be easily controlled by a small amount of hydrogen, and in which the ethylene/propylene copolymer component (rubber component) of the copolymers produced can have an increased molecular weight, and to providing the propylene-based block copolymers produced in the method.

(3) Propylene-ethylene random copolymers obtained through copolymerization of propylene and ethylene have higher impact resistance and transparency, when compared with propylene homopolymers. In addition, they have better low-temperature heat-sealability, as having a relatively low melting point. With such characteristics, propylene-ethylene random copolymers have heretofore been formed into various types of films, and now have many applications in the field of wrapping and packaging materials. However, propylene-ethylene random copolymers obtained in the prior art are not always satisfactory in point of their quality for applications in the field mentioned above, and are therefore still now problematic in that their use in some applications is often limited. In this connection, for example, one method is known for increasing the ethylene content of propylene-ethylene random copolymers in order to further enhance the impact resistance and the low-temperature heat-sealability of the copolymers. With the increase in the ethylene content thereof, the copolymers could have enhanced impact resistance and low-temperature heat-sealability, but, on the other hand, the amount of the side product, low-molecular-weight amorphous component to be in the copolymers will increase whereby films of the copolymers will be more sticky. When such sticky films are piled up or rolled, they will block together, or that is, they will be difficult to separate or unroll, and will lose their commercial value.

In case where propylene-ethylene random copolymers are produced in slurry polymerization in which a part of the monomer propylene serves as a medium, the amount of the side product, low-molecular-weight amorphous component will also increase, thereby causing a problem of adhesion of the copolymer grains formed. In addition, another problem in the polymerization system also to be caused by the increased amount of the side product therein is that the viscosity of the polymerization system increases and the copolymer productivity will be thereby lowered. As the case may be, the production line will be seriously damaged by the viscosity increase therein. In case where a catalyst of low activity is used in producing the copolymers, a large amount of catalyst residues will remain in the copolymers produced. When the copolymers containing such a large amount of catalyst residues are molded, the resulting moldings will be yellowed and their appearance will be not good. In particular, when a large amount of chlorine remains in the copolymers produced and when the copolymers containing such a large amount of chlorine are molded into films, the rolls used will be much soiled or will be gluey and the appearance of the films formed will be not good.

The fifth and sixth aspects of the present invention have been made in consideration of the matters noted above, and are directed to providing an efficient method for producing propylene-ethylene random copolymers in which the amount of sticky substances is reduced and which can be molded into films having good low-temperature heat-sealability and high impact resistance, and to providing the propylene-ethylene random copolymers produced in the method.

DISCLOSURE OF THE INVENTION

We, the present inventors have assiduously studied in order to attain the object as above, and have completed the present invention including the following first to sixth aspects.

For the first aspect of the invention, we have found that the object can be attained by an olefin polymerization catalyst that comprises (A) a catalyst component prepared by prepolymerizing olefins in the presence of a solid catalyst component (this contains titanium, magnesium, halogen and an electron donor), an organometallic compound and a specific organosilicon compound, (B) an organoaluminium compound, and (C) an organosilicon compound having an Si-O-C bonding structure. On the basis of this finding, we have completed the first aspect of the invention.

Specifically, the first aspect of the invention is to provide an olefin polymerization catalyst and a method of using the catalyst for producing an olefin polymer both mentioned below, and also to provide the olefin polymer produced in the method mentioned below.

1. A catalyst for olefin polymerization, which comprises (A) a prepolymerized catalyst component prepared by prepolymerizing an olefin in the presence of (a) a solid catalyst component containing titanium, magnesium, halogen and an electron donor, (b) an organometallic compound, and (c) an organosilicon compound of the following general formula (I-1), (B) an organometallic compound, and (C) an organosilicon compound having an Si-O-C bonding structure but differing from the compound (c):

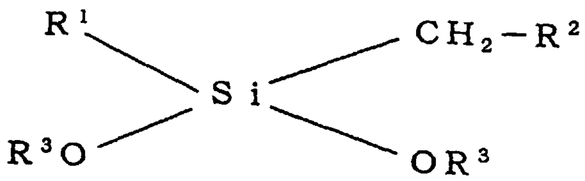

(I-1)

wherein $R^1$ indicates an alicyclic hydrocarbon group having from 3 to 12 carbon atoms; $R^2$ indicates a branched hydrocarbon group having from 3 to 20 carbon atoms; and $R^3$ indicates a hydrocarbon group having from 1 to 20 carbon atoms.

2. The olefin polymerization catalyst of above 1, wherein $R^1$ is a cyclohexyl group or a cyclopentyl group.

3. The olefin polymerization catalyst of above 1 or 2, wherein the organosilicon compound of formula (I-1) is cyclohexylisobutyldimethoxysilane.

4. The olefin polymerization catalyst of above 1 or 2, wherein the organosilicon compound of formula (I-1) is cyclopentylisobutyldimethoxysilane.

5. A method for producing an olefin polymer, which comprises polymerizing an olefin in the presence of the olefin polymerization catalyst of any of above 1 to 4.

6. An olefin polymer obtained in the olefin polymer production method of above 5.

7. The olefin polymer of above 6, for which the olefin is propylene.

8. The olefin polymer of above 7, of which the quantity of endothermic heat of fusion ΔH (J/g) measured through DSC and the limiting viscosity [η] (dl/g) measured in a solvent of tetralin at 135°C satisfy the following requirement:

$$\Delta H > 123.1 \times [\eta]^{-0.079} - 4.5.$$

For the second aspect of the invention, we, the inventors have found that the object of the invention can be attained by an olefin polymerization catalyst that comprises (A) a catalyst component prepared by prepolymerizing olefins in the presence of a solid catalyst component (this is prepared by contacting titanium tetrachloride, magnesium and an electron donor with each other), an organometallic compound, and an organosilicon compound having an Si-O-C bonding structure, (B) an organoaluminium compound, and (C) a specific organosilicon compound. On the basis of this finding, we have completed the second aspect of the invention.

Specifically, the second aspect of the invention is to provide an olefin polymerization catalyst and a method of using the catalyst for producing an olefin polymer both mentioned below, and also to provide the olefin polymer produced in the method mentioned below.

1. A catalyst for olefin polymerization, which comprises (A) a prepolymerized catalyst component prepared by prepolymerizing an olefin in the presence of (a) a solid catalyst component prepared by contacting titanium tetrachloride, a magnesium compound and a dialkyl phthalate (in which the alkyl groups each are a linear or branched hydrocarbon group having from 3 to 20 carbon atoms) with each other, (b) an organometallic compound, and (c) an organosilicon compound having an Si-O-C bonding structure, (B) an organometallic compound, and (C) an organosilicon compound of the following general formula (II-1):

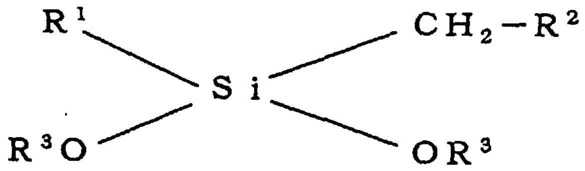

(II-1)

wherein $R^1$ indicates an alicyclic hydrocarbon group having from 3 to 12 carbon atoms; $R^2$ indicates a branched hydrocarbon group having from 3 to 20 carbon atoms; and $R^3$ indicates a hydrocarbon group having from 1 to 20 carbon atoms.

2. The olefin polymerization catalyst of above 1, wherein the magnesium compound is an alkoxymagnesium.
3. The olefin polymerization catalyst of above 1 or 2, wherein $R^1$ is a cyclohexyl group or a cyclopentyl group.
4. The olefin polymerization catalyst of any of above 1 to 3, wherein the organosilicon compound of formula (II-1) is cyclohexylisobutyldimethoxysilane.
5. The olefin polymerization catalyst of any of above 1 to 3, wherein the organosilicon compound of formula (II-1) is cyclopentylisobutyldimethoxysilane.
6. A method for producing an olefin polymer, which comprises polymerizing an olefin in a vapor phase in the presence of the olefin polymerization catalyst of any of above 1 to 5.
7. An olefin polymer obtained in the olefin polymer production method of above 6.
8. The olefin polymer of above 7, for which the olefin is propylene.
9. The olefin polymer of above 8, of which the quantity of endothermic heat of fusion ΔH (J/g) measured through DSC and the limiting viscosity [η] (dl/g) measured in a solvent of tetralin at 135°C satisfy the following requirement:

$$\Delta H > 123.1 \times [\eta]^{-0.079} - 4.5.$$

For the third aspect of the invention, we, the inventors have found that the object of the invention can be attained by a process that comprises a step of forming a polypropylene component by polymerizing propylene in the presence of the olefin polymerization catalyst of the first aspect of the invention and a step of forming an ethylene/propylene copolymer component by copolymerizing ethylene and propylene still in the presence of the catalyst. On the basis of this finding, we have completed the third aspect of the invention.

Specifically, the third aspect of the invention is to provide a method for producing a propylene-based block copolymer and the propylene-based block copolymer produced in the method, both mentioned below.

1. A method for producing a propylene-based block copolymer, which comprises a step of forming a polypropylene component by polymerizing propylene in the presence of the olefin polymerization catalyst of any of above 1 to 4 in the first aspect of the invention and a step of forming an ethylene/propylene copolymer component by copolymerizing ethylene and propylene still in the presence of the catalyst.
2. A propylene-based block copolymer produced in the production method of above 1.
3. The propylene-based block copolymer of above 2, of which the peak temperature Y (°C) in the elution curve of the crystalline component obtained in programmed-temperature fractionation and the limiting viscosity [η] (dl/g) of the polypropylene component measured in a solvent of tetralin at 135°C satisfy the following requirement:

$$Y \geq 1.505 \times [\eta] + 116.0.$$

For the fourth aspect of the invention, we, the inventors have found that the object of the invention can be attained by a process that comprises a step of forming a polypropylene component by polymerizing propylene in the presence of an olefin polymerization catalyst comprising (A) a catalyst component prepared by prepolymerizing an olefin in the presence of a solid catalyst component (this contains titanium, magnesium, halogen and an electron donor), an organometallic compound, and an organosilicon compound having an Si-O-C bonding system, (B) an organoaluminium compound, and (C) a specific organosilicon compound, and a step of forming an ethylene/propylene copolymer component by copolymerizing ethylene and propylene still in the presence of the catalyst. On the basis of this finding,

we have completed the fourth aspect of the invention.

Specifically, the fourth aspect of the invention is to provide a method for producing a propylene-based block copolymer and the propylene-based block copolymer produced in the method, both mentioned below.

1. A method for producing a propylene-based block copolymer, which comprises a step of forming a polypropylene component by polymerizing propylene in the presence of an olefin polymerization catalyst comprising (A) a prepolymerized catalyst component prepared by prepolymerizing an olefin in the presence of (a) a solid catalyst component containing titanium, magnesium, halogen and an electron donor, (b) an organometallic compound and (c) an organosilicon compound having an Si-O-C bonding structure, (B) an organometallic compound, and (C) an organosilicon compound of the following general formula (IV-1), and a step of forming an ethylene/propylene copolymer component by copolymerizing ethylene and propylene still in the presence of the catalyst:

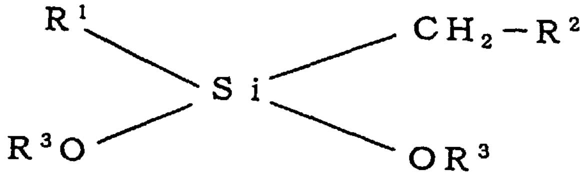

(IV-1)

wherein $R^1$ indicates an alicyclic hydrocarbon group having from 3 to 12 carbon atoms; $R^2$ indicates a branched hydrocarbon group having from 3 to 20 carbon atoms; and $R^3$ indicates a hydrocarbon group having from 1 to 20 carbon atoms.

2. The method for producing a propylene-based block copolymer of above 1, wherein $R^1$ is a cyclohexyl group or a cyclopentyl group.

3. The method for producing a propylene-based block copolymer of above 1 or 2, wherein the organosilicon compound of formula (IV-1) is cyclohexylisobutyldimethoxysilane.

4. The method for producing a propylene-based block copolymer of above 1 or 2, wherein the organosilicon compound of formula (IV-1) is cyclopentylisobutyldimethoxysilane.

5. A propylene-based block copolymer obtained in the production method of any of above 1 to 4.

6. The propylene-based block copolymer of above 5, of which the peak temperature Y (°C) in the elution curve of the crystalline component obtained in programmed-temperature fractionation and the limiting viscosity [η] (dl/g) of the polypropylene component measured in a solvent of tetralin at 135°C satisfy the following requirement:

$$Y \geq 1.505 \times [\eta] + 116.0.$$

For the fifth aspect of the invention, we, the inventors have found that, in the copolymer obtained by copolymerizing propylene and ethylene in the presence of the olefin polymerization catalyst of the first aspect of the invention, the content of a sticky, low-molecular-weight amorphous component is reduced, and that the copolymer is therefore effective for attaining the object of the invention. On the basis of this finding, we have completed the fifth aspect of the invention.

Specifically, the fifth aspect of the invention is to provide a method for producing a propylene-ethylene random copolymer and the propylene-ethylene random copolymer produced in the method, both mentioned below.

1. A method for producing a propylene-ethylene random copolymer, which comprises copolymerizing propylene and ethylene in the presence of the olefin polymerization catalyst of any of above 1 to 4 of the first aspect of the invention.

2. A propylene-ethylene random copolymer produced in the production method of above 1.

3. The propylene-ethylene random copolymer of above 2, of which the 0°C-soluble content $Y_0$ measured in programmed-temperature fractionation is at most 5 % by weight.

4. The propylene-ethylene random copolymer of above 2 or 3, of which the 0°C-soluble content $Y_0$ (% by weight) measured in programmed-temperature fractionation and the ethylene content X (% by weight) satisfy the following requirement:

$$Y_0 < 0.3734\exp(0.3811X) + 116.0.$$

For the sixth aspect of the invention, we, the inventors have found that, in the copolymer obtained by copolymerizing propylene and ethylene preferably in the presence of the olefin polymerization catalyst of the fourth aspect of

the invention, the content of a sticky, low-molecular-weight amorphous component is reduced, and that the copolymer is therefore effective for attaining the object of the invention. On the basis of this finding, we have completed the sixth aspect of the invention.

Specifically, the sixth aspect of the invention is to provide a method for producing a propylene-ethylene random copolymer and the propylene-ethylene random copolymer produced in the method, both mentioned below.

1. A method for producing a propylene-ethylene random copolymer, which comprises copolymerizing propylene and ethylene in the presence of the olefin polymerization catalyst of any of above 1 to 4 of the fourth aspect of the invention.
2. A propylene-ethylene random copolymer, of which the 0°C-soluble content $Y_0$ measured in programmed-temperature fractionation is at most 5 % by weight.
3. The propylene-ethylene random copolymer of above 2, of which the 0°C-soluble content $Y_0$ (% by weight) measured in programmed-temperature fractionation and the ethylene content X (% by weight) satisfy the following requirement:

$$Y_0 < 0.3734\exp(0.3811X) + 116.0.$$

4. The propylene-ethylene random copolymer of above 2 or 3, which is produced in the production method of above 1.

BEST MODES OF CARRYING OUT THE INVENTION

The first to sixth aspects of the invention are described in detail hereinunder.

I. First Aspect of the Invention:

The olefin polymerization catalyst, the method for producing an olefin polymer, and the olefin polymer all falling within the scope of the first aspect of the invention are described in detail in this section, in which the first aspect will be simply referred to as "the invention".

[I] Olefin Polymerization Catalyst:

The olefin polymerization catalyst of the invention comprises (A) a prepolymerized catalyst component prepared by prepolymerizing an olefin in the presence of (a) a solid catalyst component containing titanium, magnesium, halogen and an electron donor, (b) an organometallic compound, and (c) an organosilicon compound of the following general formula (I-1), (B) an organometallic compound, and (C) an organosilicon compound having an Si-O-C bonding structure but differing from the compound (c):

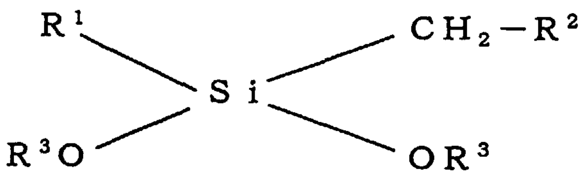

(I-1)

wherein $R^1$ indicates an alicyclic hydrocarbon group having from 3 to 12 carbon atoms; $R^2$ indicates a branched hydrocarbon group having from 3 to 20 carbon atoms; and $R^3$ indicates a hydrocarbon group having from 1 to 20 carbon atoms.

The catalyst components are described below.

(A) Prepolymerized Catalyst Component:

The prepolymerized catalyst component (A) is prepared by prepolymerizing an olefin in the presence of a solid catalyst component (a), an organometallic component (b) and an organosilicon compound (c) of formula (I-1), which are described in detail hereinunder.

(a) Solid Catalyst Component:

The solid catalyst component contains titanium, magnesium, halogen and an electron donor. Concretely, it may be prepared by contacting the following titanium compound, magnesium compound, and electron donor with each other.

(1) Titanium Compound:

The titanium compound for use herein is not specifically defined, but preferred are those represented by the following general formula (I-2):

$$TiX^1_p(OR_4)_{4-p} \quad (I\text{-}2).$$

In formula (I-2), $X^1$ indicates a halogen atom, and is preferably a chlorine atom or a bromine atom, more preferably a chlorine atom. $R_4$ indicates a hydrocarbon group, and it may be saturated or unsaturated, and may be linear, branched or cyclic. It may contain hetero atoms of sulfur, nitrogen, oxygen, silicon, phosphorus and others. Preferably, $R_4$ is a hydrocarbon group having from 1 to 10 carbon atoms, more preferably an alkyl group, an alkenyl group, a cycloalkenyl group, an aryl group or an aralkyl group, even more preferably a linear or branched alkyl group. A plurality $-OR_4$ groups, if any, in the formula may be the same or different. Specific examples of $R_4$ include a methyl group, an ethyl group, an n-propyl group, an isopropyl group, an n-butyl group, a sec-butyl group, an isobutyl group, an n-pentyl group, an n-hexyl group, an n-heptyl group, an n-octyl group, an n-decyl group, an allyl group, a butenyl group, a cyclopentyl group, a cyclohexyl group, a cyclohexenyl group, a phenyl group, a tolyl group, a benzyl group, a phenethyl group, etc. p indicates an integer of from 0 to 4.

Specific examples of the titanium compound of formula (I-2) include tetraalkoxytitaniums such as tetramethoxytitanium, tetraethoxytitanium, tetra-n-propoxytitanium, tetraisopropoxytitanium, tetra-n-butoxytitanium, tetraisobutoxytitanium, tetracyclohexyloxytitanium, tetraphenoxytitanium, etc.; titanium tetrahalides such as titanium tetrachloride, titanium tetrabromide, titanium tetraiodide, etc.; alkoxytitanium trihalides such as methoxytitanium trichloride, ethoxytitanium trichloride, n-propoxytitanium trichloride, n-butoxytitanium trichloride, ethoxytitanium tribromide, etc.; dialkoxytitanium dihalides such as dimethoxytitanium dichloride, diethoxytitanium dichloride, diisopropoxytitanium dichloride, di-n-propoxytitanium dichloride, diethoxytitanium dibromide, etc.; trialkoxytitanium monohalides such as trimethoxytitanium chloride, triethoxytitanium chloride, triisopropoxytitanium chloride, tri-n-propoxytitanium chloride, tri-n-butoxytitanium chloride, etc. Of those, preferred are high-halogen titanium compounds, and especially preferred is titanium tetrachloride. One or more of these titanium compounds may be used herein either singly or as combined.

(2) Magnesium Compound:

The magnesium compound for use herein is not specifically defined, but preferred are those represented by the following general formula (I-3):

$$MgR^5R^6 \quad (I\text{-}3).$$

In formula (I-3), $R^5$ and $R^6$ each indicate a hydrocarbon group, $OR^7$ (in which $R^7$ indicates a hydrocarbon group), or a halogen atom. The hydrocarbon group for $R^5$, $R^6$ and $R^7$ includes, for example, an alkyl group having from 1 to 12 carbon atoms, a cycloalkyl group having from 3 to 12 carbon atoms, an aryl group having from 6 to 20 carbon atoms, an aralkyl group having from 7 to 20 carbon atoms, etc.; and the halogen atom for $R^5$ and $R^6$ includes chlorine, bromine, iodine and fluorine atoms. $R^5$, $R^6$ and $R^7$ may be the same or different.

Specific examples of the magnesium compound of formula (I-3) include alkylmagnesiums and arylmagnesiums such as dimethylmagnesium, diethylmagnesium, diisopropylmagnesium, dibutylmagnesium, dihexylmagnesium, dioctylmagnesium, ethylbutylmagnesium, diphenylmagnesium, dicyclohexylmagnesium, butyloctylmagnesium, etc.; alkoxymagnesiums and aryloxymagnesiums such as dimethoxymagnesium, diethoxymagnesium, dipropoxymagnesium, dibutoxymagnesium, dihexyloxymagnesium, dioctoxymagnesium, diphenoxymagnesium, dicyclohexyloxymagnesium, etc.; alkylmagnesium halides and arylmagnesium halides such as ethylmagnesium chloride, butylmagnesium chloride, hexylmagnesium chloride, isopropylmagnesium chloride, isobutylmagnesium chloride, t-butylmagnesium chloride, phenylmagnesium bromide, benzylmagnesium chloride, ethylmagnesium bromide, butylmagnesium bromide, phenylmagnesium chloride, butylmagnesium iodide, etc.; alkoxymagnesium halides and aryloxymagnesium halides such as butoxymagnesium chloride, cyclohexyloxymagnesium chloride, phenoxymagnesium chloride, ethoxymagnesium bromide, butoxymagnesium bromide, ethoxymagnesium iodide, etc.; magnesium halides such as magnesium chloride, magnesium bromide, magnesium iodide, etc.

Of these magnesium compounds, preferred are magnesium halides, alkoxymagnesiums and alkylmagnesium halides. Especially preferred are alkoxymagnesiums.

The magnesium compounds may be prepared from metal magnesium or magnesium-containing compounds.

One embodiment of preparing the magnesium compounds comprises contacting metal magnesium with halogen and alcohol. The halogen includes iodine, chlorine, bromine and fluorine. Of these, preferred is iodine. The alcohol includes methanol, ethanol, propanol, butanol, octanol, etc.

Another embodiment of preparing them comprises contacting a magnesium alkoxide of $Mg(OR^8)_2$ (in which $R^8$ indicates a hydrocarbon group having from 1 to 20 carbon atoms) with a halide.

The halide includes, for example, silicon tetrachloride, silicon tetrabromide, tin tetrachloride, tin tetrabromide, hydrogen chloride, etc. Of these, preferred is silicon tetrachloride.

The group $R^8$ includes, for example, an alkyl group such as a methyl group, an ethyl group, a propyl group, an isopropyl group, an isobutyl group, a hexyl group, an octyl group, etc.; a cyclohexyl group; an alkenyl group such as an allyl group, an propenyl group, a butenyl group, etc.; an aryl group such as a phenyl group, a tolyl group, a xylyl group, etc.; an aralkyl group such as a phenethyl group, a 3-phenylpropyl group, etc. Of these, especially preferred are alkyl groups having from 1 to 10 carbon atoms.

The magnesium compound may be held on a carrier such as silica, alumina, polystyrene or the like. One or more of these magnesium compounds may be used herein either singly or as combined. The magnesium compound may contain halogen such as iodine, etc.; and any other elements such as silicon, aluminium, etc.; and may also contain an electron donor of, for example, alcohols, ethers, esters, etc.

(3) Electron Donor:

The electron donor for use herein includes oxygen-containing electron donors, for example, alcohols, phenols, ketones, aldehydes, carboxylic acids, malonic acid, esters of organic acids or inorganic acids, ethers such as monoethers, diethers or polyethers, etc.; and nitrogen-containing electron donors such as ammonia, amines, nitriles, isocyanates, etc. Of those, preferred are polycarboxylates, and more preferred are aromatic polycarboxylates. Even more preferred are aromatic dicarboxylates. Preferably, the organic group in the ester moiety of these esters is a linear, branched or cyclic aliphatic hydrocarbon residue.

Concretely mentioned are dialkyl esters of dicarboxylic acids such as phthalic acid, naphthalene-1,2-dicarboxylic acid, naphthalene-2,3-dicarboxylic acid, 5,6,7,8-tetrahydronaphthalene-1,2-dicarboxylic acid, 5,6,7,8-tetrahydronaphthalene-2,3-dicarboxylic acid, indane-4,5-dicarboxylic acid, indane-5,6-dicarboxylic acid, etc., in which the alkyl groups may be any of methyl, ethyl, n-propyl, isopropyl, n-butyl, isobutyl, t-butyl, n-pentyl, 1-methylbutyl, 2-methylbutyl, 3-methylbutyl, 1,1-dimethylpropyl, 1-methylpentyl, 2-methylpentyl, 3-methylpentyl, 4-methylpentyl, 1-ethylbutyl, 2-ethylbutyl, n-hexyl, cyclohexyl, n-heptyl, n-octyl, n-nonyl, 2-methylhexyl, 3-methylhexyl, 4-methylhexyl, 2-ethylhexyl, 3-ethylhexyl, 4-ethylhexyl, 2-methylpentyl, 3-methylpentyl, 2-ethylpentyl, and 3-ethylpentyl groups. Of these, preferred are diphthalates. Preferably, the organic group in the ester moiety of these esters is a linear or branched aliphatic hydrocarbon residue having at least 4 carbon atoms.

Preferred examples of the diphthalates include di-n-butyl phthalate, diisobutyl phthalate, di-n-heptyl phthalate, diethyl phthalate, etc. More preferred are di-n-butyl phthalate and diisobutyl phthalate. One or more of these compounds may be used herein either singly or as combined.

The method of contacting the components with each other is not specifically defined, and may be effected in any known manner. For contacting them with each other, for example, referred to are the methods described in Japanese Patent Laid-Open Nos. 43094/1978, 135102/1980, 135103/1980, 18606/1981, etc. Concretely, herein employable are (1) a method of grinding a magnesium compound or a complex of a magnesium compound and an electron donor, in the presence of an electron donor and optionally a grinding aid or the like, followed by reacting the resulting particles with a titanium compound; (2) a method of reacting a liquid magnesium compound of no reducibility with a liquid titanium compound in the presence of an electron donor to thereby precipitate a solid titanium complex; (3) a method of further reacting the product in (1) or (2) with a titanium compound; (4) a method of further reacting the product in (1) or (2) with an electron donor and a titanium compound; and (5) a method of grinding a magnesium compound or a complex of a magnesium compound and an electron donor, in the presence of an electron donor, a titanium compound and optionally a grinding aid or the like, and optionally further processing the resulting particles with halogen or a halide.

Apart from these methods, also employable for preparing the solid catalyst component (A) are the methods described in Japanese Patent Laid-Open Nos. 166205/1981, 63309/1982, 190004/1982, 300407/1982, 47003/1983, etc.

The solid catalyst component may be held on a carrier. Concretely, a solid magnesium compound held on a carrier of, for example, an oxide of an element of Groups II to IV of the Periodic Table, such as silicon oxide, magnesium

oxide or the like, or a composite oxide containing at least one oxide of an element of Groups II to IV of the Periodic Table, such as silica-alumina or the like, is contacted with an electron donor and a titanium compound in a solvent at 0 to 200°C, preferably at 10 to 150°C, for 2 minutes to 24 hours, whereby the solid catalyst component may be held on the carrier.

The amount of the titanium compound to be used may fall generally between 0.5 and 100 mols, but preferably between 1 and 50 mols, per mol of magnesium of the magnesium compound. The amount of the electron donor to be used may fall generally between 0.01 and 10 mols, but preferably between 0.05 and 0.15 mols, per mol of magnesium of the magnesium compound. For the halide, silicon tetrachloride may be added to the solid catalyst component.

The temperature at which the constituent components are contacted with each other to prepare the solid catalyst component may fall generally between -20 and 200°C, but preferably between 20 and 150°C; and the contact time for them may fall generally between 1 minute and 24 hours, but preferably between 10 minutes and 6 hours.

The order of contacting them with each other is not specifically defined. For example, the constituent components may be contacted with each other in an inert solvent such as hydrocarbons, etc.; or, as the case may be, they are separately diluted with an inert solvent such as hydrocarbons, etc., and then contacted with each other. The inert solvent includes, for example, aliphatic hydrocarbons such as n-pentane, isopentane, n-hexane, n-heptane, n-octane, isooctane, etc.; aromatic hydrocarbons such as benzene, toluene, xylene, etc.; and their mixtures.

Preferably, the titanium compound is contacted twice or more with the magnesium compound serving as a carrier, so that it can be well held on the magnesium compound.

The solid catalyst component thus prepared through the contact treatment as above may be washed with an inert solvent such as hydrocarbons, etc. For the inert solvent, usable are those mentioned above. The solid catalyst component may be stored in dry, or may be stored in an inert solvent such as hydrocarbons, etc.

(b) Organometallic Compound:

The organometallic compound for use herein is not specifically defined, including, for example, organoaluminium compounds, organomagnesium compounds, organozinc compounds, etc. Of these, preferred are organoaluminium compounds. More preferred are organoaluminium compounds having any of alkyl groups, halogen atoms, hydrogen atoms and alkoxy groups; aluminoxanes; and their mixtures. Concretely, they include trialkylaluminiums such as trimethylaluminium, triethylaluminium, triisopropylaluminium, triisobutylaluminium, trioctylaluminium, etc.; dialkylaluminium monochlorides such as diethylaluminium monochloride, diisopropylaluminium monochloride, diisobutylaluminium monochloride, dioctylaluminium monochloride, etc.; alkylaluminium sesquihalides such as ethylaluminium sesquichloride, etc.; linear aluminoxanes such as methylaluminoxane, etc. Of those organoaluminium compounds, preferred are trialkylaluminiums in which the alkyl group has from 1 to 5 carbon atoms; and more preferred are trimethylaluminium, triethylaluminium, triisopropylaluminium, and triisobutylaluminium. One or more of these organoaluminium compounds are usable herein either singly or as combined.

The component (c) for use herein is an organosilicon compound of the following general formula (I-1):

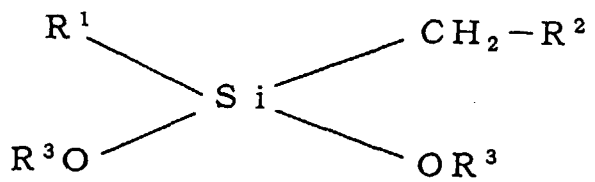

(I-1)

wherein $R^1$ indicates an alicyclic hydrocarbon group having from 3 to 12 carbon atoms; $R^2$ indicates a branched hydrocarbon group having from 3 to 20 carbon atoms; and $R^3$ indicates a hydrocarbon group having from 1 to 20 carbon atoms.

Concretely, $R^1$ is an alicyclic hydrocarbon group having from 3 to 12 carbon atoms, such as a cyclopropyl group, a cyclobutyl group, a cyclopentyl group, a cyclohexyl group, a cycloheptyl group, a cyclooctyl group, a 1-norbornyl group, a 2-norbornyl group, etc. For this, especially preferred is a cyclopentyl group or a cyclohexyl group. $R^2$ is a branched hydrocarbon group having from 3 to 20 carbon atoms, such as an isopropyl group, an isobutyl group, a sec-butyl group, a t-butyl group, a neopentyl group, etc. Preferably, it is an isopropyl group. $R^3$ includes an alkyl group such as a methyl group, an ethyl group, a propyl group, an isopropyl group, a butyl group, an isobutyl group, a hexyl group, an octyl group, etc.; a cyclohexyl group; an alkenyl group such as an allyl group, a propenyl group, a butenyl group, etc.; an aryl group such as a phenyl group, a tolyl group, a xylyl group, etc.; and an aralkyl group such as a phenethyl group, a 3-phenylpropyl group, etc. Of these, especially preferred for $R^3$ are alkyl groups having from 1 to 10 carbon atoms.

Concretely, the organosilicon compound of formula (I-1) includes cyclopropylisobutyldimethoxysilane, cyclopropylisopentyldimethoxysilane, cyclopropyl-2-methylbutyldimethoxysilane, cyclopropylneopentyldimethoxysilane, cyclopropyl-2-methylhexyldimethoxysilane, cyclobutylisobutyldimethoxysilane, cyclobutylisopentyldimethxysilane, cyclobutyl-2-methylbutyldimethoxysilane, cyclobutylneopentyldimethoxysilane, cyclobutyl-2-methylhexyldimethoxysilane, cyclopentylisobutyldimethoxysilane, cyclopentylisopentyldimethoxysilane, cyclopentyl-2-methylbutyldimethoxysilane, cyclopentylneopentyldimethoxysilane, cyclopentyl-2-methylhexyldimethoxysilane, cyclohexylisobutyldimethoxysilane, cyclohexylisopentyldimethoxysilane, cyclohexyl-2-methylbutyldimethoxysilane, cyclohexylneopentyldimethoxysilane, cyclohexyl-2-methylhexyldimethoxysilane, cycloheptylisobutyldimethoxysilane, cycloheptylisopentyldimethoxysilane, cycloheptyl-2-methylbutyldimethoxysilane, cycloheptylneopentyldimethoxysilane, cycloheptyl-2-methylhexyldimethoxysilane, cyclooctylisobutyldimethoxysilane, cyclooctylisopentyldimethoxysilane, cyclooctyl-2-methylbutyldimethoxysilane, cyclooctylneopentyldimethoxysilane, cyclooctyl-2-methylhexyldimethoxysilane, 1-norbornylisobutyldimethoxysilane, 1-norbornylisopentyldimethoxysilane, 1-norbornyl-2-methylbutyldimethoxysilane, 1-norbornylneopentyldimethoxysilane, 1-norbornyl-2-methylhexyldimethoxysilane, 2-norbornylisobutyldimethoxysilane, 2-norbornylisopentyldimethoxysilane, 2-norbornyl-2-methylbutyldimethoxysilane, 2-norbornylneopentyldimethoxysilane, 2-norbornyl-2-methylhexyldimethoxysilane, etc. Of these, preferred are cyclopentylisobutyldimethoxysilane, and cyclohexylisobutyldimethoxysilane.

The organosilicon compounds for the component (c) can be produced in any method. One typical production route for them is as follows:

$$R^1Si(OMe)_3 + R^2CH_2MgBr \rightarrow R^1(R^2CH_2\text{-})Si(OMe)_2$$

In this production route, the starting compound $R^1Si(OMe)_3$ can be derived from an organosilicon compound through known alkylation or alkoxylation. The compound $R^1Si(OMe)_3$ is converted into the organosilicon compound of formula (I-1) through known Grignard reaction.

The organosilicon compounds mentioned above can be used herein either singly or as combined.

An olefin is prepolymerized in the presence of these components (a), (b) and (c) to give the component (A). The olefin is not specifically defined, but is preferably an $\alpha$ -olefin of the following general formula (I-4):

$$R^9\text{-}CH=CH_2 \qquad (I\text{-}4).$$

In formula (I-4), $R^9$ indicates a hydrogen atom or a hydrocarbon group. The hydrocarbon group may be saturated or unsaturated, or may be linear, branched or cyclic. Concretely, the olefin includes ethylene, propylene, 1-butene, 1-pentene, 1-hexene, 1-heptene, 1-octene, 1-decene, 3-methyl-1-pentene, 4-methyl-1-pentene, vinylcyclohexane, etc. One or more of these olefins can be used herein either singly or as combined. Concretely, the olefin is prepolymerized in the presence of the components (a), (b) and (c), generally at a temperature falling between 1 and 100°C and under a pressure falling between normal pressure and 5 MPa (gauge). The prepolymerization time falls between 1 minute and 10 hours, preferably between 10 minutes and 5 hours. The degree of olefin prepolymerization may fall generally between 0.1 and 1000 % by weight, but preferably between 1.0 and 500 % by weight of the solid catalyst component.

(B) Organometallic Compound:

For the organometallic compounds for the component (B), referred to are those for the component (b) mentioned hereinabove.

(C) Organosilicon Compound:

The component (C) is an organosilicon compound having an Si-O-C bonding structure, but differs from the organosilicon compounds for the component (c) mentioned hereinabove. Preferred examples of the organosilicon compound having an Si-O-C bonding structure for the component (C) are dicyclopentyldimethoxysilane, cyclopentylethyldimethoxysilane, cyclopentylisopropyldimethoxysilane, cyclopentyl-tert-butyldimethoxysilane, thexylcyclopentyldimethoxysilane, thexylcyclohexyldimethoxysilane, diisopropyldimethoxysilane, diisobutyldimethoxysilane, and di-tert-butyldimethoxysilane. Of these, preferred is dicyclopentyldimethoxysilane.

[II] Method for Producing Olefin Polymer:

For producing an olefin polymer according to the invention, an olefin is polymerized in the presence of the olefin polymerization catalyst mentioned above. In the method, the amount of the catalyst to be used is not specifically defined. In general, the amount of the solid catalyst component (A) to be used may fall between 0.0005 and 1 mmol, in

terms of the titanium atom therein, per liter of the reaction capacity. For the amount of the organometallic compound (B) to be used, the atomic ratio, metal/titanium may fall generally between 1 and 1000, but preferably between 10 and 500. If the atomic ratio oversteps the defined range, the catalyst activity will be low. For the amount of the organosilicon compound (C) to be used, the molar ratio, organosilicon compound (C)/organometallic compound (B) may fall generally between 0.02 and 2.0, but preferably between 0.05 and 1.0. If the molar ratio oversteps the defined range, the catalyst activity will also be low.

Olefins for use herein may be α-olefins of formula (I-4) mentioned above. Of the α-olefins, especially preferred is propylene. For producing olefin polymers in the invention, propylene may be homopolymerized; or propylene may be copolymerized with other α-olefins such as ethylene, 1-butene, 1-hexene, etc. If desired, dienes such as butadiene, etc., and even other olefins may be used in producing olefin polymers herein.

The polymerization mode in producing olefin polymers in the invention is not specifically defined, but preferred is vapor-phase polymerization. For the polymerization system, any of batch polymerization or continuous polymerization is employable herein. As the case may be, two-stage or more multi-stage polymerization is acceptable herein, in which the polymerization condition may vary in different stages.

For the polymerization condition, the polymerization pressure is not specifically defined and may fall generally between atmospheric pressure and 8 MPa (gauge), but preferably between 0.2 and 5 MPa (gauge); the polymerization temperature may fall generally between 0 and 200°C, but preferably between 30 and 100°C. The polymerization time varies, depending on the type of the starting olefin and the polymerization temperature, and therefore could not be indiscriminately defined. In general, however, it may fall between 5 minutes and 20 hours, preferably between 10 minutes and 10 hours or so.

The molecular weight of the polymers to be produced can be controlled by adding a chain transfer agent to the polymerization system, preferably hydrogen thereto. If desired, an inert gas such as nitrogen or the like may be present in the polymerization system. According to the olefin polymer production method using the catalyst of the invention, it is easy to produce olefin polymers having high melt fluidity even though a smaller amount of hydrogen is added to the polymerization system than that to be added to the polymerization system using a conventional catalyst that comprises magnesium, titanium, halogen and an electron donor. For example, in the method of the invention for producing a propylene homopolymer, the relationship between the limiting viscosity [η] (dl/g) of the propylene homopolymer measured in a solvent of tetralin at 135°C and the ratio of hydrogen partial pressure (MPa)/total pressure (MPa) in the polymerization system preferably satisfies the following:

$$[\eta] \leq -2.7975 \times ([\text{hydrogen partial pressure}]/[\text{total pressure}]) + 1.80,$$

more preferably,

$$[\eta] \leq -2.7975 \times ([\text{hydrogen partial pressure}]/[\text{total pressure}]) + 1.68.$$

Regarding the catalyst components for use in the invention, the component (A), the component (B) and the component (C) may be previously blended in a pre-determined ratio so that they are contacted with each other, and immediately an olefin may be applied thereto to start its polymerization. Alternatively, after the catalyst components have been contacted with each other, the resulting catalyst may be ripened for 0.2 to 3 hours or so, and thereafter an olefin may be applied thereto and polymerized in the presence of the thus-ripened catalyst. If desired, the catalyst components may be previously suspended in and diluted with an inert solvent or an olefin, and then fed into the polymerization system.

In the invention, the post-treatment after polymerization may be effected in any ordinary manner. For example, in vapor-phase polymerization, the powdery polymer produced is taken out of the polymerization reactor, and then exposed to a nitrogen stream atmosphere so as to remove the non-reacted olefin from it. If desired, the polymer may be pelletized through an extruder. In this step, a small amount of water, an alcohol, or the like may be added to the polymer so as to completely inactivate the catalyst. In bulk polymerization, the polymer produced is taken out of the polymerization reactor, then the non-reacted monomer is completely removed from it, and thereafter the polymer may be pelletized.

[III] Olefin Polymer:

The olefin polymer of the invention is produced according to the above-mentioned olefin polymer production method. One preferred embodiment of the olefin polymer is a propylene polymer; and more preferred is a propylene homopolymer. The propylene homopolymer may have a melt flow rate (MFR), measured at 230°C under 2.16 kg according to JIS-K7210, of from 0.01 to 1000 (g/10 min), preferably from 0.1 to 500. Its Mw/Mn measured through gel permeation chromatography generally falls between 3.5 and 5.0, preferably between 3.5 and 4.5. When satisfying the

following requirement with respect to the quantity of endothermic heat of fusion ΔH (J/g) measured through DSC and the limiting viscosity [η] (dl/g) measured in a solvent of tetralin at 135 °C, the propylene homopolymer is more preferred as its elastic modulus, impact resistance and melt fluidity are all high.

$$\Delta H > 123.1 \times [\eta]^{-0.079} - 4.5.$$

Methods for measuring ΔH and [η] will be described hereinunder.

The invention is described in more detail with reference to the following Examples, which, however, are not intended to restrict the scope of the invention.

(1) Measurement of melt flow rate (MFR):

Measured at 230°C under 2.16 kg according to JIS-K7210.

(2) Measurement of [η]:

Measured in a solvent of tetralin at 135°C, using an automatic viscometer, Rigo's VMR-053 Model.

(3) ΔH:

Using a differential scanning calorimeter (DSC-7 from Parkin Elmer), a sample (10 ± 0.05 mg) is subjected to a heat cycle that comprises heating and melting it at 220°C in a nitrogen atmosphere for 3 minutes, then cooling it down to 50 °C at a cooling rate of 10°C/min, holding it at 50°C for 3 minutes, and again heating it up to 190°C at a heating rate of 10°C/min. On its melting curve thus obtained, the quantity of endothermic heat of fusion of the sample, ΔH (J/g) is read within the temperature range of from 100°C to 175°C. The DSC device used herein is so controlled that a standard sample indium, when held therein at 140°C for 3 minutes and then heated up to 170 °C at a heating rate of 10°C/min, could show its onset melting point falling between 156.5 and 156.6°C and its ΔH falling between 28.20 and 28.70 (J/g), and that another standard sample lead, when held therein at 300°C for 3 minutes and then heated up to 350°C at a heating rate of 10°C/min, could show its onset melting point falling between 327.37 and 327.57°C. Before the sample is measured therein, an empty pan is set in the DSC device, then held at 50°C for 3 minutes and thereafter heated up to 190°C at a heating rate of 10°C/min, and the melting curve of the pan is used as the base line. The melting curve of the sample obtained as above is corrected, based on the data of the base line, and ΔH of the sample is read on the thus-corrected melting curve.

Example I-1:

Preparation of Solid Catalyst Component:

A three-neck flask having a capacity of 5 liters and equipped with a stirrer was purged with nitrogen, and 16 g of diethoxymagnesium was put thereinto, to which was added 80 ml of dewatered octane. This was heated at 40°C, and 2.4 ml of silicon tetrachloride was added thereto and stirred for 20 minutes, to which was added 3.4 ml of di-n-butyl phthalate (DNBP). The resulting solution was further heated up to 80 °C, and 77 ml of titanium tetrachloride was dropwise added thereto through a dropping funnel. Next, the flask was still further heated to have an inner temperature of 125°C, at which the compounds therein were contacted with each other for 2 hours. After this, stirring the mixture in the flask was stopped, and the mixture precipitated to give a solid therein. The supernatant was removed. Then, 100 ml of dewatered octane was added to this, and heated up to 125°C with stirring. This was kept at the elevated temperature for 1 minute, and then stirring it was stopped, whereby this precipitated to give a solid. The supernatant was removed. The washing operation was repeated 7 times. Next, 122 ml of titanium tetrachloride was added to this, which was again heated to have an inner temperature of 125°C, at which the compounds were contacted with each other for 2 hours. Next, this was washed with dewatered octane at 125°C in the same manner as previously, and the washing operation was repeated 6 times. Thus was obtained a solid catalyst component.

Prepolymerization:

A three-neck flask having a capacity of 0.5 liters and equipped with a stirrer was purged with nitrogen, and 6.0 g of the solid catalyst component was put thereinto. 47 ml of dewatered heptane was added to this. 1.8 ml of triethylaluminium and 0.9 ml of cyclohexylisobutyldimethoxysilane (CyiBuSi) were added to it. This was heated to have an inner temperature of 50°C, and propylene gas was introduced thereinto under normal pressure, and reacted for 2 hours.

The thus-processed solid component was fully washed with dewatered heptane to obtain a catalyst A.

Polymerization:

A stainless autoclave having a capacity of 5 liters and equipped with a stirrer was fully dried with nitrogen gas and then purged with propylene gas. This was kept heated at 70 °C, and propylene gas was introduced thereinto to have an increased pressure of 0.05 MPa (gauge). In that condition, hydrogen gas was introduced thereinto to have an increased pressure of 0.6 MPa (gauge), and propylene gas was further introduced thereinto so that its pressure could increase gradually up to 2.8 MPa (gauge). On the other hand, 20 ml of heptane, 4 mmols of triethylaluminium, 1 mmol of dicyclopentyldimethoxysilane (DCPDMS) and 0.02 mmols, in terms of the Ti atom therein, of the catalyst A were metered in a 60 ml catalyst supply tube having been purged with nitrogen gas, and these were all put into the autoclave, in which propylene was polymerized for 60 minutes in the presence of these. Next, the autoclave was degassed to have an atmospheric pressure, cooled down to room temperature, and then opened, and the polymer powder formed was taken out of it. The catalyst and the polymerization condition employed herein are shown in Table I-1 (in this, "Example I-1" is simply designated by "Example 1", and the same shall apply to Comparative Examples).

To the thus-obtained polypropylene powder, added were 1000 ppm of calcium stearate (from Nippon Yushi) and 1500 ppm of DHT-4A (from Kyowa Chemical) both serving as a neutralizing agent, 750 ppm of P-EPQ (from Clariant) and 1500 ppm of Irganox 1010 (from Ciba Speciality Chemicals) both serving as an antioxidant, and 2000 ppm of PTBBA-A1 (from Dai-Nippon Ink Chemical Industry) serving as a nucleating agent, and well blended. The resulting mixture was kneaded in melt and pelletized through a 20 mm∅ single-screw melt extruder into pellets. A part of the pellets were tested for the physical properties of the polymer, and the test data are given in Table I-1.

Comparative Example I-1:

The same process as in Example I-1 was repeated, except that the organosilicon compound used both in prepolymerization and in essential polymerization was cyclohexylmethyldimethoxysilane (CyMeSi) and that the hydrogen pressure in essential polymerization was 0.67 MPa (gauge).

Comparative Example I-2:

The same process as in Comparative Example I-1 was repeated, except that the hydrogen pressure in essential polymerization was 0.35 MPa (gauge).

Comparative Example I-3:

The same process as in Example I-1 was repeated, except that the organosilicon compound used in prepolymerization and was dicyclopentyldimethoxysilane (DCPDMS) and that the hydrogen pressure in essential polymerization was 0.67 MPa (gauge).

Table I-1

| | Example 1 | Comp. Ex. 1 | Comp. Ex. 2 | Comp. Ex. 3 |
|---|---|---|---|---|
| Dialkyl Phthalate | DNBP | DNBP | DNBP | DNBP |
| Organosilicon Compound in Prepolymerization | CyiBuSi | CyMeSi | CyMeSi | DCPDMS |
| Polymerization Time (min) | 60 | 60 | 60 | 60 |
| Polymerization Temperature (°C) | 70 | 70 | 70 | 70 |
| Hydrogen Pressure (MPa) | 0.60 | 0.67 | 0.35 | 0.67 |
| Total Pressure (MPa) | 2.80 | 2.80 | 2.80 | 2.80 |
| Catalyst (mmol) | 0.01 | 0.02 | 0.02 | 0.02 |
| Triethylaluminium (mmol) | 4.0 | 4.0 | 4.0 | 4.0 |
| Organosilicon Compound in Essential Polymerization (mmol) | DCPDMS | CyMeSi | CyMeSi | DCPDMS |
| | 1.0 | 1.0 | 1.0 | 1.0 |

Table I-1 (continued)

| | Example 1 | Comp. Ex. 1 | Comp. Ex. 2 | Comp. Ex. 3 |
|---|---|---|---|---|
| Activity (kg/g-Ti) | 520.0 | 210.0 | 290.0 | 510.0 |
| MFR (g/10 min) | 102.0 | 47.6 | 14.0 | 38.4 |
| [η] (dl/g) | 0.96 | 0.96 | 1.36 | 1.12 |
| ΔH (J/g) | 121.5 | 118.9 | 115.1 | 120.6 |
| $123.1 \times [\eta]^{-0.079} - 4.5$ | 119.0 | 119.0 | 115.6 | 117.5 |

II. Second Aspect of the Invention:

The olefin polymerization catalyst, the method for producing an olefin polymer, and the olefin polymer all falling within the scope of the second aspect of the invention are described in detail in this section, in which the second aspect will be simply referred to as "the invention".

[I] Olefin Polymerization Catalyst:

The olefin polymerization catalyst of the invention comprises (A) a prepolymerized catalyst component prepared by prepolymerizing an olefin in the presence of (a) a solid catalyst component prepared by contacting a magnesium compound, titanium tetrachloride, and a dialkyl phthalate (in which the alkyl groups each are a linear or branched hydrocarbon group having from 3 to 20 carbon atoms) with each other, (b) an organometallic compound, and (c) an organosilicon compound having an Si-O-C bonding structure, (B) an organometallic compound, and (C) an organosilicon compound of the following general formula (II-1):

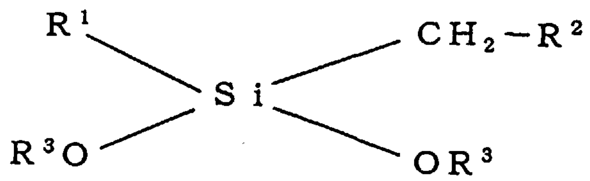

(II-1)

wherein $R^1$ indicates an alicyclic hydrocarbon group having from 3 to 12 carbon atoms; $R^2$ indicates a branched hydrocarbon group having from 3 to 20 carbon atoms; and $R^3$ indicates a hydrocarbon group having from 1 to 20 carbon atoms.

The catalyst components are described below.

(A) Prepolymerized Catalyst Component:

The prepolymerized catalyst component (A) is prepared by prepolymerizing an olefin in the presence of a solid catalyst component (a), an organometallic component (b) and an organosilicon compound (c) having an Si-O-C bonding structure, which are described in detail hereinunder.

(a) Solid Catalyst Component:

The solid catalyst component is prepared by contacting titanium tetrachloride, a magnesium compound and a dialkyl phthalate (in which the alkyl groups each are a linear or branched hydrocarbon group having from 3 to 20 carbon atoms) with each other.

(1) Titanium Tetrachloride:

Titanium tetrachloride for use herein is not specifically defined, and its purity is not also specifically defined.

(2) Magnesium Compound:

The magnesium compound for use herein is not specifically defined, but preferred are those represented by the following general formula (II-2):

$$MgR^4R^5 \qquad (II\text{-}2)$$

In formula (II-2), $R^4$ and $R^5$ each indicate a hydrocarbon group, $OR^6$ (in which $R^6$ indicates a hydrocarbon group), or a halogen atom. The hydrocarbon group for $R^4$, $R^5$ and $R^6$ includes, for example, an alkyl group having from 1 to 12 carbon atoms, a cycloalkyl group having from 3 to 12 carbon atoms, an aryl group having from 6 to 20 carbon atoms, an aralkyl group having from 7 to 20 carbon atoms, etc.; and the halogen atom for $R^4$ and $R^5$ includes chlorine, bromine, iodine and fluorine atoms. $R^4$, $R^5$ and $R^6$ may be the same or different.

For specific examples of the magnesium compound of formula (II-2), referred to are those described in the part of "(2) Magnesium Compound" in (A)(a) Solid Catalyst Component in the section of the first aspect of the invention.

Of the magnesium compounds described in that part, preferred for use herein are magnesium halides, alkoxymagnesiums and alkylmagnesium halides. Especially preferred are alkoxymagnesiums.

The magnesium compounds may be prepared from metal magnesium or magnesium-containing compounds. For the details of the method of preparing them, also referred to are those described in the part of "(2) Magnesium Compound" in (A)(a) Solid Catalyst Component in the section of the first aspect of the invention.

The magnesium compound may be held on a carrier such as silica, alumina, polystyrene or the like. One or more of the magnesium compounds mentioned above may be used herein either singly or as combined. The magnesium compound may contain halogen such as iodine, etc.; and any other elements such as silicon, aluminium, etc.; and may also contain an electron donor of, for example, alcohols, ethers, esters, etc.

(3) Dialkyl Phthalate:

The dialkyl phthalate serves as an electron donor. In this, the alkyl groups each are a linear or branched hydrocarbon group having from 3 to 20 carbon atoms. Concretely, it is a dialkyl ester of phthalic acid, in which the alkyl groups may be any of n-propyl, isopropyl, n-butyl, isobutyl, t-butyl, n-pentyl, 1-methylbutyl, 2-methylbutyl, 3-methylbutyl, 1,1-dimethylpropyl, 1-methylpentyl, 2-methylpentyl, 3-methylpentyl, 4-methylpentyl, 1-ethylbutyl, 2-ethylbutyl, n-hexyl, n-heptyl, n-octyl, n-nonyl, 2-methylhexyl, 3-methylhexyl, 4-methylhexyl, 2-ethylhexyl, 3-ethylhexyl, 4-ethylhexyl, 2-methylpentyl, 3-methylpentyl, 2-ethylpentyl, and 3-ethylpentyl groups.

Of these, preferred are di-n-butyl phthalate, diisobutyl phthalate, di-n-heptyl phthalate, etc. One or more of these compounds may be used herein either singly or as combined.

The method of contacting the components with each other is not specifically defined, and may be effected in any known manner. For the details of the method, referred to are those described in the part (A)(a) Solid Catalyst Component in the section of the first aspect of the invention.

The solid catalyst component may be held on a carrier. For the details of the carrier, referred to are those described in the part (A)(a) Solid Catalyst Component in the section of the first aspect of the invention.

For the details of the amount of the titanium compound to be used herein, referred to are those described in the part (A)(a) Solid Catalyst Component in the section of the first aspect of the invention.

For the details of the temperature at which the constituent components are contacted with each other and the order of contacting them, referred to are those described in the part (A)(a) Solid Catalyst Component in the section of the first aspect of the invention.

The solid catalyst component thus prepared through the contact treatment as above may be washed with an inert solvent such as hydrocarbons, etc. For the inert solvent, usable are those mentioned above. The solid catalyst component may be stored in dry, or may be stored in an inert solvent such as hydrocarbons, etc.

(b) Organometallic Compound:

The organometallic compound for use herein is not specifically defined. For its details, referred to are those described in the part of "(b) Organometallic Compound" in (A) Solid Catalyst Component in the section of the first aspect of the invention.

(c) Organosilicon Compound with Si-O-C bonding structure:

The organosilicon compound having an Si-O-C bonding structure for the component (c) is not specifically defined. For this, preferred are organosilicon compounds of formula (II-1) which will be mentioned hereinunder, and

also dicyclopentyldimethoxysilane, cyclopentylethyldimethoxysilane, cyclopentylisopropyldimethoxysilane, cyclopentyl-tert-butyldimethoxysilane, thexylcyclopentyldimethoxysilane, thexylcyclohexyldimethoxysilane, diisopropyldimethoxysilane, diisobutyldimethoxysilane, and di-tert-butyldimethoxysilane. More preferred are the organosilicon compounds of formula (II-1) and dicyclopentyldimethoxysilane. Even more preferred are cyclohexylisobutyldimethoxysilane, cyclopentylisobutyldimethoxysilane, and dicyclopentyldimethoxysilane.

An olefin is prepolymerized in the presence of these components (a), (b) and (c) to give the component (A). The olefin is not specifically defined. For its details, referred to are those described in the part (A) Solid Catalyst Component in the section of the first aspect of the invention.

For the details of olefin prepolymerization to give the component (A), also referred to are those described in the part (A) Solid Catalyst Component in the section of the first aspect of the invention.

(B) Organometallic Compound:

For the organometallic compounds for the component (B), referred to are those for the component (b) mentioned hereinabove.

(C) Organosilicon Compound:

The component (C) is an organosilicon compound of the following general formula (II-1):

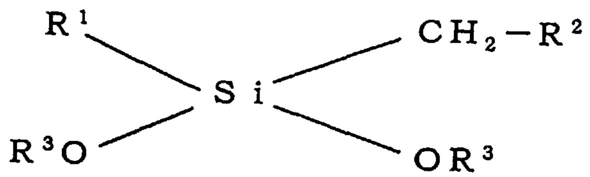

(II-1)

wherein $R^1$ indicates an alicyclic hydrocarbon group having from 3 to 12 carbon atoms; $R^2$ indicates a branched hydrocarbon group having from 3 to 20 carbon atoms; and $R^3$ indicates a hydrocarbon group having from 1 to 20 carbon atoms.

Concretely, $R^1$ is an alicyclic hydrocarbon group having from 3 to 12 carbon atoms, such as a cyclopropyl group, a cyclobutyl group, a cyclopentyl group, a cyclohexyl group, a cycloheptyl group, a cyclooctyl group, a 1-norbornyl group, a 2-norbornyl group, etc. For this, especially preferred is a cyclopentyl group or a cyclohexyl group. $R^2$ is a branched hydrocarbon group having from 3 to 20 carbon atoms, such as an isopropyl group, an isobutyl group, a sec-butyl group, a t-butyl group, a neopentyl group, etc. Preferably, it is an isopropyl group. $R^3$ includes an alkyl group such as a methyl group, an ethyl group, a propyl group, an isopropyl group, a butyl group, an isobutyl group, a hexyl group, an octyl group, etc.; a cyclohexyl group; an alkenyl group such as an allyl group, a propenyl group, a butenyl group, etc.; an aryl group such as a phenyl group, a tolyl group, a xylyl group, etc.; and an aralkyl group such as a phenethyl group, a 3-phenylpropyl group, etc. Of these, especially preferred for $R^3$ are alkyl groups having from 1 to 10 carbon atoms.

For the details of the organosilicon compound of formula (II-1), referred to are those described in the part of "(c) Organosilicon Compound of Formula (I-1)" in (A) Solid Catalyst Component in the section of the first aspect of the invention.

The organosilicon compound for the component (C) can be produced in any desired manner. For the details of the specific production route for the compound, also referred to are those described in the part of "(c) Organosilicon Compound of Formula (I-1)" in (A) Solid Catalyst Component in the section of the first aspect of the invention.

The organosilicon compounds mentioned above may be used herein either singly or as combined.

[II] Method for Producing Olefin Polymer:

For producing an olefin polymer according to the invention, an olefin is polymerized in the presence of the olefin polymerization catalyst mentioned above. In the method, the amount of the catalyst to be used is not specifically defined. In general, the amount of the solid catalyst component (A) to be used may fall between 0.0005 and 1 mmol, in terms of the titanium atom therein, per liter of the reaction capacity. For the amount of the organometallic compound (B) to be used, the atomic ratio, metal/titanium may fall generally between 1 and 1000, but preferably between 10 and 500. If the atomic ratio oversteps the defined range, the catalyst activity will be low. For the amount of the organosilicon compound (C) to be used, the molar ratio, organosilicon compound (C)/organometallic compound (B) may fall generally between 0.02 and 2.0, but preferably between 0.05 and 1.0. If the molar ratio oversteps the defined range, the catalyst

activity will also be low.

For the details of the olefin for use herein, referred to are those described in the part of "[II] Method for Producing Olefin Polymer" in the section of the first aspect of the invention. For the olefin for use herein, preferred is propylene. For producing olefin polymers in the invention, propylene may be homopolymerized; or propylene may be copolymerized with other α-olefins such as ethylene, 1-butene, 1-hexene, etc. If desired, dienes such as butadiene, etc., and even other olefins may be used in producing olefin polymers herein.

The polymerization mode in producing olefin polymers in the invention is not specifically defined, but preferred is vapor-phase polymerization. For the polymerization system, any of batch polymerization or continuous polymerization is employable herein. As the case may be, two-stage or more multi-stage polymerization is acceptable herein, in which the polymerization condition may vary in different stages.

For the polymerization condition, the polymerization pressure is not specifically defined and may fall generally between atmospheric pressure and 8 MPa (gauge), but preferably between 0.2 and 5 MPa (gauge); the polymerization temperature may fall generally between 0 and 200°C, but preferably between 30 and 100°C. The polymerization time varies, depending on the type of the starting olefin and the polymerization temperature, and therefore could not be indiscriminately defined. In general, however, it may fall between 5 minutes and 20 hours, preferably between 10 minutes and 10 hours or so.

The molecular weight of the polymers to be produced can be controlled by adding a chain transfer agent to the polymerization system, preferably hydrogen thereto. If desired, an inert gas such as nitrogen or the like may be present in the polymerization system. According to the olefin polymer production method using the catalyst of the invention, it is easy to produce olefin polymers having high melt fluidity even though a smaller amount of hydrogen is added to the polymerization system than that to be added to the polymerization system using a conventional catalyst that comprises magnesium, titanium, halogen and an electron donor. For example, in the method of the invention for producing a propylene homopolymer, the relationship between the limiting viscosity [η] (dl/g) of the propylene homopolymer measured in a solvent of tetralin at 135°C and the ratio of hydrogen partial pressure (MPa)/total pressure (MPa) in the polymerization system preferably satisfies the following:

$$[\eta] \leq -2.7975 \times ([\text{hydrogen partial pressure}]/[\text{total pressure}]) + 1.80,$$

more preferably,

$$[\eta] \leq -2.7975 \times ([\text{hydrogen partial pressure}]/[\text{total pressure}]) + 1.68.$$

Regarding the catalyst components for use in the invention, the component (A), the component (B) and the component (C) may be previously blended in a pre-determined ratio so that they are contacted with each other, and immediately an olefin may be applied thereto to start its polymerization. Alternatively, after the catalyst components have been contacted with each other, the resulting catalyst may be ripened for 0.2 to 3 hours or so, and thereafter an olefin may be applied thereto and polymerized in the presence of the thus-ripened catalyst. If desired, the catalyst components may be previously suspended in and diluted with an inert solvent or an olefin, and then fed into the polymerization system.

In the invention, the post-treatment after polymerization may be effected in any ordinary manner. For the details of the post-treatment, referred to are those described in the section of the first aspect of the invention.

[III] Olefin Polymer:

The olefin polymer of the invention is produced according to the above-mentioned olefin polymer production method. One preferred embodiment of the olefin polymer is a propylene polymer; and more preferred is a propylene homopolymer. The propylene homopolymer may have a melt flow rate (MFR), measured at 230°C under 2.16 kg according to JIS-K7210, of from 0.01 to 1000 (g/10 min), preferably from 0.1 to 500. Its Mw/Mn measured through gel permeation chromatography generally falls between 3.5 and 5.0, preferably between 3.5 and 4.5. When satisfying the following requirement with respect to the quantity of endothermic heat of fusion ΔH (J/g) measured through DSC and the limiting viscosity [η] (dl/g) measured in a solvent of tetralin at 135 °C, the propylene homopolymer is more preferred as its elastic modulus, impact resistance and melt fluidity are all high.

$$\Delta H > 123.1 \times [\eta]^{-0.079} - 4.5.$$

For the details of the methods for measuring the melt flow rate (MFR), ΔH and [η] of the polymers, referred to are flow rate (MFR), ΔH and [η] of the polymers, referred to are those described in the section of the first aspect of the invention.

The invention is described in more detail with reference to the following Examples, which, however, are not intended to restrict the scope of the invention. .

Example II-1:

Preparation of Solid Catalyst Component:

This is the same as in the section of "Preparation of Solid Catalyst Component" in Example I-1 for the first aspect of the invention.

Prepolymerization:

In the same manner as in the section of "Prepolymerization" in Example I-1 for the first aspect, prepared was the catalyst A.

Polymerization:

A stainless autoclave having a capacity of 5 liters and equipped with a stirrer was fully dried with nitrogen gas and then purged with propylene gas. This was kept heated at 70 °C, and propylene gas was introduced thereinto to have an increased pressure of 0.05 MPa (gauge). In that condition, hydrogen gas was introduced thereinto to have an increased pressure of 0.67 MPa (gauge), and propylene gas was further introduced thereinto so that its pressure could increase gradually up to 2.8 MPa (gauge). On the other hand, 20 ml of heptane, 4 mmols of triethylaluminium, 1 mmol of cyclohexylisobutyldimethoxysilane (CyiBuSi) and 0.02 mmols, in terms of the Ti atom therein, of the catalyst A were metered in a 60 ml catalyst supply tube having been purged with nitrogen gas, and these were all put into the autoclave, in which propylene was polymerized for 120 minutes in the presence of these. Next, the autoclave was degassed to have an atmospheric pressure, cooled down to room temperature, and then opened, and the polymer powder formed was taken out of it. The catalyst and the polymerization condition employed herein are shown in Table II-1 (in this, "Example II-1" is simply designated by "Example 1", and the same shall apply to Comparative Examples).

To the thus-obtained polypropylene powder, added were 1000 ppm of calcium stearate (from Nippon Yushi) and 1500 ppm of DHT-4A (from Kyowa Chemical) both serving as a neutralizing agent, 750 ppm of P-EPQ (from Clariant) and 1500 ppm of Irganox 1010 (from Ciba Speciality Chemicals) both serving as an antioxidant, and 2000 ppm of PTBBA-A1 (from Dai-Nippon Ink Chemical Industry) serving as a nucleating agent, and well blended. The resulting mixture was kneaded in melt and pelletized through a 20 mm∅ single-screw melt extruder into pellets. A part of the pellets were tested for the physical properties of the polymer, and the test data are given in Table II-1.

Example II-2:

The same process as in Example II-1 was repeated, except that the hydrogen pressure in propylene polymerization was 0.35 MPa (gauge).

Comparative Example II-1:

The same process as in Example II-1 was repeated, except that the internal donor used in catalyst preparation was 2.5 ml of diethyl phthalate (DEP) and not 3.5 ml of di-n-butyl phthalate.

Comparative Example II-2:

The same process as in Example II-1 was repeated, except that the donor used in prepolymerization and in essential polymerization was dicyclopentyldimethoxysilane (DCPDMS) and not cyclohexylisobutyldimethoxysilane.

Table II-1

| | Example 1 | Example 2 | Comp. Ex. 1 | Comp. Ex. 2 |
|---|---|---|---|---|
| Dialkyl Phthalate | DNBP | DNBP | DEP | DNBP |
| Organosilicon Compound in Prepolymerization | CyiBuSi | CyiBuSi | CyiBuSi | DCPDMS |
| Polymerization Time (min) | 120 | 120 | 120 | 120 |

Table II-1 (continued)

| | Example 1 | Example 2 | Comp. Ex. 1 | Comp. Ex. 2 |
|---|---|---|---|---|
| Polymerization Temperature (°C) | 70 | 70 | 70 | 70 |
| Hydrogen Pressure (MPa) | 0.67 | 0.35 | 0.67 | 0.67 |
| Total Pressure (MPa) | 2.80 | 2.80 | 2.80 | 2.80 |
| Catalyst (mmol) | 0.02 | 0.02 | 0.02 | 0.02 |
| Triethylaluminium (mmol) | 4.0 | 4.0 | 4.0 | 4.0 |
| Organosilicon Compound in Essential Polymerization (mmol) | CyiBuSi | CyiBuSi | CyiBuSi | DCPDMS |
| | 1.0 | 1.0 | 1.0 | 1.0 |
| Activity (kg/g-Ti) | 1050 | 1080 | 750 | 1020 |
| MFR (g/10 min) | 73.1 | 16.9 | 47.8 | 38.4 |
| [η] (dl/g) | 0.96 | 1.30 | 0.95 | 1.12 |
| ΔH (J/g) | 121.3 | 118.0 | 118.9 | 120.6 |
| $123.1 \times [\eta]^{-0.079} - 4.5$ | 119.0 | 116.1 | 119.1 | 117.5 |

III. Third Aspect of the Invention:

The method for producing a propylene-based block copolymer and the propylene-based block copolymer produced in the method both falling within the scope of the third aspect of the invention are described in detail in this section, in which the third aspect will be simply referred to as "the invention".

[I] Method for Producing Propylene-based Block Copolymer:

The method for producing a propylene-based block copolymer of the invention comprises a step of forming a polypropylene component by polymerizing propylene in the presence of the olefin polymerization catalyst stated in the first aspect of the invention and a step of forming an ethylene/propylene copolymer component by copolymerizing ethylene and propylene still in the presence of the catalyst.

In the method, the amount of the catalyst to be used is not specifically defined. In general, the amount of the solid catalyst component (A) to be used may fall between 0.0005 and 1 mmol, in terms of the titanium atom therein, per liter of the reaction capacity. For the amount of the organometallic compound (B) to be used, the atomic ratio, metal/titanium may fall generally between 1 and 1000, but preferably between 10 and 500. If the atomic ratio oversteps the defined range, the catalyst activity will be low. For the amount of the organosilicon compound (C) to be used, the molar ratio, organosilicon compound (C)/organometallic compound (B) may fall generally between 0.02 and 2.0, but preferably between 0.05 and 1.0. If the molar ratio oversteps the defined range, the catalyst activity will also be low.

The mode of polymerization for the method of the invention is not specifically defined, for which is employable any of solution polymerization, slurry polymerization, vapor-phase polymerization, bulk polymerization, etc. The polymerization may be effected in any mode of batch polymerization or continuous polymerization. In batch polymerization or continuous polymerization to produce the propylene-based block copolymer of the invention, in general, propylene is first homopolymerized to form propylene homopolymer segments of the copolymer, and then copolymerized with ethylene to form ethylene/propylene copolymer segments thereof. In continuous polymerization to produce the copolymer, for example, starting propylene gas, hydrogen gas serving as a molecular weight-controlling agent, and the catalyst mentioned above are fed into a polymerization reactor in the former stage, and the propylene monomer is homopolymerized in the reactor to form propylene homopolymer segments. In this stage, the degree of polymerization is controlled by controlling the polymerization time. Next, for the latter stage copolymerization, propylene gas, ethylene gas, hydrogen gas, and optionally the catalyst are fed into the reactor to form propylene/ethylene copolymer segments. The block copolymer thus obtained through the process is composed of the propylene homopolymer segments and the propylene/ethylene copolymer segments. In the step of forming the copolymer segments, ethylene alone may be used for the comonomer, but if desired, it may be combined with any other α-olefins except ethylene and propylene. If further desired, dienes such as butadiene, etc., and any other olefins may also be used in the copolymerization stage.

For the condition in the step of propylene homopolymerization, the polymerization pressure is not specifically defined and may fall generally between atmospheric pressure and 8 MPa (gauge), but preferably between 0.2 and 5 MPa (gauge); the polymerization temperature may fall generally between 0 and 200°C, but preferably between 30 and

100°C. The polymerization time may fall generally between 5 minutes and 20 hours, but preferably between 10 minutes and 10 hours or so.

For the condition in the step of propylene/ethylene copolymerization, the polymerization pressure is not also specifically defined and may fall generally between atmospheric pressure and 8 MPa (gauge), but preferably between 0.2 and 5 MPa (gauge); the polymerization temperature may fall generally between 0 and 200°C, but preferably between 20 and 100°C. The polymerization time may fall generally between 1 minute and 20 hours, but preferably between 1 minute and 10 hours or so. Regarding the ratio of ethylene and propylene to be fed in this step, the molar ratio of ethylene/propylene may fall between 0.01 and 9, preferably between 0.05 and 2.3.

The molecular weight of the propylene homopolymer component and the copolymer component of the block copolymer to be produced can be controlled by adding a chain transfer agent to the polymerization system, preferably hydrogen thereto. If desired, an inert gas such as nitrogen or the like may be present in the polymerization system. According to the copolymer production method using the catalyst of the invention, it is easy to produce propylene-based block copolymers having high melt fluidity even though a smaller amount of hydrogen is added to the polymerization system than that to be added to the polymerization system using a conventional catalyst that comprises magnesium, titanium, halogen and an electron donor. For example, in the step of producing the propylene homopolymer component, the relationship between the limiting viscosity [η] (dl/g) of the propylene homopolymer measured in a solvent of tetralin at 135°C and the ratio of hydrogen partial pressure (MPa)/total pressure (MPa) in the polymerization system preferably satisfies the following:

$$[\eta] \leq -2.7975 \times ([\text{hydrogen partial pressure}]/[\text{total pressure}]) + 1.80,$$

more preferably,

$$[\eta] \leq -2.7975 \times ([\text{hydrogen partial pressure}]/[\text{total pressure}]) + 1.68.$$

Accordingly, the molecular weight of the copolymer component is easy to increase, and, as a result, the block copolymer obtained has the advantages of high stiffness and high impact resistance.

Regarding the catalyst components for use in the invention, the component (A), the component (B) and the component (C) may be previously blended in a pre-determined ratio so that they are contacted with each other, and immediately propylene may be applied thereto to start its polymerization. Alternatively, after the catalyst components have been contacted with each other, the resulting catalyst may be ripened for 0.2 to 3 hours or so, and thereafter propylene may be applied thereto and polymerized in the presence of the thus-ripened catalyst. If desired, the catalyst components may be previously suspended in and diluted with an inert solvent or propylene, and then fed into the polymerization system.

In the invention, the post-treatment after polymerization may be effected in any ordinary manner. For the details of the post-treatment, referred to are those described in the section of the first aspect of the invention.

[II] Propylene-based Block Copolymer:

The propylene-based block copolymer of the invention is produced according to the above-mentioned copolymer production method. The propylene-based block copolymer may have a melt flow rate (MFR), measured at 230°C under 2.16 kg according to JIS-K7210, of from 0.01 to 1000 (g/10 min), preferably from 0.1 to 500. Its Mw/Mn measured through gel permeation chromatography generally falls between 3.5 and 5.0, preferably between 3.5 and 4.5. It is desirable that the propylene-based block copolymer satisfies the following requirement with respect to the peak temperature Y (°C) in the elution curve of the crystalline component obtained in programmed-temperature fractionation and the limiting viscosity [η] (dl/g) of the polypropylene component measured in a solvent of tetralin at 135°C.

$$Y \geq 1.505 \times [\eta] + 116.0.$$

The polypropylene component of the copolymer is meant to include the propylene homopolymer segments formed in the step of propylene homopolymerization. Its [η] preferably falls between 0.7 and 3.0 (dl/g). Its Y is preferably not lower than 117.1°C. Methods for measuring Y and [η] are described in the section of Examples to follow hereinunder.

Preferably, the amount of the room-temperature (25°C) xylene-soluble component (this will be referred to as amorphous component) of the propylene-based block copolymer of the invention falls between 5 and 50 % by weight, more preferably between 15 and 35 % by weight. Also preferably, the ethylene content of the amorphous component of the copolymer falls between 15 and 50 % by weight, more preferably between 25 and 45 % by weight.

The invention is described in more detail with reference to the following Examples, which, however, are not

intended to restrict the scope of the invention. The methods for measuring the physical properties of the polymers produced are mentioned below.

(1) Measurement of melt flow rate (MFR):

Measured at 230°C under 2.16 kg according to JIS-K7210.

(2) Measurement of [η]:

Measured in a solvent of tetralin at 135°C, using an automatic viscometer, Rigo's VMR-053 Model.

(3) Peak temperature in elution curve in programmed-temperature fractionation:

The polymer prepared through polymerization is subjected to temperature-programmed fractionation to determine the peak temperature in the elution curve. 75 mg of the polymer to be tested is put into 10 ml of o-dichlorobenzene at room temperature, and dissolved therein by stirring it at 135 to 150°C for 1 hour to prepare a sample. 0.5 ml of the resulting sample solution is filled into a column at 135°C, and then gradually cooled to 0°C at a cooling rate of 10°C/hr whereby the polymer is crystallized out on the surface of the filler in the column. In this stage, the amount of the polymer not crystallized out but remained as such is the 0°C-soluble component of the polymer. The elution curve of the crystalline component of the polymer is obtained as follows: After cooled, the column is again heated at a heating rate of 40°C/hr with o-dichlorobenzene being introduced thereinto at a flow rate of 2 ml/min, and the concentration of the polymer eluted out is measured with an IR detector at predetermined intervals. The data are plotted to give an elution curve of the polymer, in which the temperature for the peak of the curve is read. This is the peak temperature Y (°C) in the elution curve of the crystalline component of the polymer. The column is 4.6 mmØ × 150 mm in size; and the filler is Chromosorb P. The elution curve is calibrated based on a standard sample, linear PE (SRM 1475), which is eluted under the same condition as above to give a peak temperature of 100 °C (± 0.5°C). The wavelength of the IR detector used herein is 3.41 μm.

(4) Measurement of the amount of room-temperature xylene-soluble component:

The room-temperature (25°C) xylene-soluble and insoluble components are extracted from a polymer sample according to the following process:

⑴ 5 ± 0.05 g of a sample is put into a 1000 ml egg-plant type flask, to which is added 1 ± 0.05 g of BHT (antioxidant). Then, a rotor is inserted into the flask, to which is added 700 ± 10 ml of paraxylene.
⑵ Next, a condenser is fitted to the flask, and the flask is heated in an oil bath at 140 ± 5°C for 120 ± 30 minutes with the rotor therein being moved. In the flask in that condition, the sample is dissolved in paraxylene.
⑶ Next, the content of the flask is poured into a 1000 ml beaker. With stirring it with a stirrer therein, the solution in the beaker is left cooled (for 8 hours or longer) to be at room temperature (25°C), and the precipitate formed therein is taken out through filtration through a metal gauze filter.
⑷ The filtrate having passed through the metal gauze filter is further filtered through a paper filter, and the filtrate thus having passed through the paper filter is put into 2000 ± 100 ml of methanol in a 3000 ml beaker. While being stirred with a stirrer at room temperature (25°C), this is left as such for 2 hours or longer.
⑸ Next, the precipitate formed in the beaker is taken out through filtration through a metal gauze filter, and dried in air for 5 hours or longer and then in a vacuum drier at 100 ± 5°C for 240 to 270 minutes. The dry solid thus collected is a room-temperature (25°C) xylene-soluble component of the sample.
⑹ On the other hand, the residue having been collected through filtration in the previous step ⑶ is again dissolved in paraxylene in the same manner as in the previous steps ⑴ and ⑵ Then, the resulting solution is, while hot, immediately poured into 2000 ± 100 ml of methanol in a 3000 ml beaker, stirred with a stirrer for 2 hours or longer, and then left at room temperature (25°C) overnight.
⑺ Next, the precipitate thus formed in the beaker is taken out through filtration through a metal gauze filter, and dried in air for 5 hours or longer and then in a vacuum drier at 100 ± 5°C for 240 to 270 minutes. The dry solid thus collected is a room-temperature (25°C) xylene-insoluble component of the sample.

The 25°C xylene-soluble content (w) of the sample is represented by:

$$w\ (\%\ \text{by weight}) = 100 \times C/A,$$

wherein A indicates the weight (g) of the sample, and C indicates the weight (g) of the soluble component collected in the step 〈5〉.

The insoluble content of the sample is represented by (100 - w) % by weight.

(5) Measurement of the ethylene content of the room-temperature (25°C) xylene-soluble component through $^{13}$C-NMR:

The ethylene unit content of the room-temperature (25 °C) xylene-soluble component is obtained according to the following method. A sample is subjected to $^{13}$C-NMR according to the process mentioned below, and its $^{13}$C-NMR spectrum is analyzed. From the intensity of 7 peaks appearing in the region of from 21 to 35 ppm [based on the standard of tetramethylsilane (TMS) chemical shift] in the $^{13}$C-NMR spectrum of the sample, the triad chain fraction (mol%) of ethylene (E) and propylene (P) is calculated according to the following formulae:

$$f_{EPE} = [K(T\delta\delta)/T] \times 100,$$

$$f_{PPE} = [K(T\beta\delta)/T] \times 100,$$

$$f_{EEE} = [K(S\gamma\delta)/4T + K(S\delta\delta)/2T] \times 100,$$

$$f_{PPP} = [K(T\beta\beta)/T] \times 100,$$

$$f_{PEE} = [K(S\beta\gamma)/T] \times 100,$$

$$f_{PEP} = [K(S\beta\beta)/T] \times 100,$$

provided that

$$T = K(T\delta\delta) + K(T\beta\delta) + K(S\gamma\delta)/4 + K(S\delta\delta)/2 + K(T\beta\beta) + K(S\ \beta\delta) + K(S\beta\beta),$$

wherein $f_{EPE}$ indicates the EPE triad chain fraction (mol%),
and $K(T\delta\delta)$ indicates the integrated intensity of the peaks assigned to the $T\delta\delta$ carbon.

From the triad chain fraction obtained as above, the ethylene unit content (% by weight) of the sample is calculated according to the following formula:

$$\text{Ethylene unit content (\% by weight)} = 28\{3f_{EEE} + 2(f_{PEE} + f_{EPE}) + f_{PPE} + f_{PEP}\} \times 100/[28[3f_{EEE} + 2(f_{PEE} + f_{EPE}) + f_{PPE} + f_{PEP}] + 42[3f_{PPP} + 2(f_{PPE} + f_{PEP}) + f_{EPE} + f_{PEE}]].$$

〈Process of $^{13}$C-NMR〉

220 mg of a sample is put into an NMR sample tube, to which is added 3 ml of a mixed solvent of 1,2,4-trichlorobenzene/heavy benzene (90/10, by volume). The tube is sealed with a cap, in which the sample is uniformly dissolved in the mixed solvent at 130°C. The resulting sample solution is subjected to $^{13}$C-NMR under the following conditions:

Apparatus: JEOL's JNM-EX400,
Pulse width: 9 µs (45°),
Pulse frequency: 4 seconds,
Spectrum width: 20000 Hz,
Temperature: 130°C,
Number of integration: 1000 to 10000.

(6) Measurement of impact resistance strength:

According to JIS K7110, injection moldings are measured for their Izod impact strength (with notch) at 23°C and at -30 °C.

(7) Measurement of flexural modulus:

According to JIS K7203, injection moldings are measured for their flexural modulus.

Example III-1:

Preparation of Solid Catalyst Component:

This is the same as in the section of "Preparation of Solid Catalyst Component" in Example I-1 for the first aspect of the invention.

Prepolymerization:

In the same manner as in the section of "Prepolymerization" in Example I-1 for the first aspect, prepared was the catalyst A.

Polymerization:

A stainless autoclave having a capacity of 5 liters and equipped with a stirrer was fully dried with nitrogen gas and then purged with propylene gas. This was kept heated at 70 °C, and propylene gas was introduced thereinto to have an increased pressure of 0.05 MPa (gauge). In that condition, hydrogen gas was introduced thereinto to have an increased pressure of 0.48 MPa (gauge), and propylene gas was further introduced thereinto so that its pressure could increase gradually up to 2.8 MPa (gauge). On the other hand, 20 ml of heptane, 4 mmols of triethylaluminium, 1 mmol of dicyclopentyldimethoxysilane (DCP) and 0.02 mmols, in terms of the Ti atom therein, of the catalyst A were metered in a 60 ml catalyst supply tube having been purged with nitrogen gas, and these were all put into the autoclave, in which propylene was polymerized for 60 minutes in the presence of these. Next, the autoclave was degassed to have an atmospheric pressure, and the polymer therein was sampled in a nitrogen atmosphere. The sample is for measuring its limiting viscosity [η]. Then, the autoclave was again degassed in vacuum. Next, ethylene gas/propylene gas in a ratio of 4.7/5.3 by mol was introduced into the autoclave to have an increased pressure of 1 MPa, and kept under the increased pressure of 1 MPa at 70°C for 20 minutes to attain propylene-ethylene copolymerization. After this, the autoclave was degassed to have an atmospheric pressure and cooled down to room temperature. In that condition, the autoclave was opened, and the polymer powder formed was taken out of it. To the thus-obtained block polypropylene powder, added were 1000 ppm of calcium stearate (from Nippon Yushi) and 1500 ppm of DHT-4A (from Kyowa Chemical) both serving as a neutralizing agent, 750 ppm of P-EPQ (from Clariant) and 1500 ppm of Irganox 1010 (from Ciba Speciality Chemicals) both serving as an antioxidant, and 2000 ppm of PTBBA-A1 (from Dai-Nippon Ink Chemical Industry) serving as a nucleating agent, and well blended. The resulting mixture was kneaded in melt and pelletized through a 20 mm∅ single-screw melt extruder into pellets. A part of the pellets were subjected to the predetermined structural analysis tests. The remaining pellets were molded through injection into test pieces, which were tested for their physical properties. The test data are given in Table III-1 (in this, "Example III-1" is simply designated by "Example 1", and the same shall apply to Comparative Examples).

Example III-2:

The same process as in Example III-1 was repeated, except that the time for the second stage copolymerization was 40 minutes.

Example III-3:

The same process as in Example III-1 was repeated, except that the time for the first stage polymerization was 30 minutes.

Example III-4:

The same process as in Example III-1 was repeated, except that the molar ratio of ethylene/propylene was 2.7/7.3 and the polymerization time was 60 minutes in the second stage copolymerization.

Comparative Example III-1:

The same process as in Example III-2 was repeated, except that cyclohexylmethyldimethoxysilane (CyMe) and not cyclohexylisobutyldimethoxysilane was used for the organosilicon compound in prepolymerization, and that the hydrogen pressure in the first stage homopolymerization to form propylene homopolymer was 0.55 MPa (gauge).

Comparative Example III-2:

The same process as in Comparative Example III-1 was repeated, except that the time for the second stage copolymerization was 70 minutes.

Comparative Example III-3:

The same process as in Example III-2 was repeated, except that dicyclopentyldimethoxysilane (DCP) and not cyclohexylisobutyldimethoxysilane was used for the organosilicon compound in prepolymerization.

Table III-1

| | Example 1 | Example 2 | Example 3 | Example 4 | Comp. Ex. 1 | Comp. Ex. 2 | Comp. Ex. 3 |
|---|---|---|---|---|---|---|---|
| Organosilicon Compound in Prepolymerization | CyiBuSi | CyiBuSi | CyiBuSi | CyiBuSi | CyMe | CyMe | DCP |
| Time for 1st stage polymerization (min) | 60 | 60 | 30 | 60 | 60 | 60 | 60 |
| Temperature in 1st stage polymerization (°C) | 70 | 70 | 70 | 70 | 70 | 70 | 70 |
| Hydrogen Pressure in 1st stage polymerization (MPa) | 0.48 | 0.48 | 0.48 | 0.48 | 0.55 | 0.55 | 0.48 |
| Total Pressure in 1st stage polymerization (MPa) | 2.8 | 2.8 | 2.8 | 2.8 | 2.8 | 2.8 | 2.8 |
| Catalyst (mmol) | 0.02 | 0.02 | 0.02 | 0.02 | 0.02 | 0.02 | 0.02 |
| Triethylaluminium | 4.0 | 4.0 | 4.0 | 4.0 | 4.0 | 4.0 | 4.0 |
| Organosilicon Compound in Polymerization | DCP | DCP | DCP | DCP | CyMe | CyMe | DCP |
| (mmol) | 1.0 | 1.0 | 1.0 | 1.0 | 1.0 | 1.0 | 1.0 |
| Time for 2nd stage polymerization (min) | 20 | 40 | 40 | 60 | 40 | 70 | 40 |
| Temperature in 2nd stage polymerization (°C) | 70 | 70 | 70 | 70 | 70 | 70 | 70 |
| Ethylene/Propylene (by mol) in 2nd stage polymerization | 4.7/5.3 | 4.7/5.3 | 4.7/5.3 | 2.7/7.3 | 5.5/4.5 | 5.5/4.5 | 4.7/5.3 |
| Total Pressure in 2nd stage polymerization (MPa) | 1.0 | 1.0 | 1.0 | 1.0 | 1.0 | 1.0 | 1.0 |
| MFR (g/10 min) | 30.5 | 31.5 | 32.3 | 30.6 | 29.8 | 30.9 | 14.8 |
| [η] (dl/g) | 1.2 | 1.19 | 1.23 | 1.21 | 1.2 | 1.22 | 1.52 |
| Y (°C) | 119.2 | 119.4 | 119.6 | 119.4 | 117.1 | 117.3 | 119.8 |
| 1.505 × [η] + 116.0 | 117.8 | 117.8 | 117.9 | 117.8 | 117.8 | 117.8 | 118.3 |
| Amount of Amorphous Component (wt.%) | 16.3 | 23.1 | 31.3 | 21.8 | 22.3 | 30.7 | 21.9 |
| Ethylene Content of Amorphous Component (wt.%) | 41.3 | 41.9 | 41.5 | 25.3 | 41.9 | 40.3 | 41 |
| Flexural Modulus (MPa) | 1460 | 1203 | 895 | 1180 | 990 | 705 | 1065 |
| Izod Impact Strength (23°C, kJ/m²) | 7.1 | 14.6 | 66.2 | 21.5 | 6.6 | 30.6 | 15.1 |
| Izod Impact Strength (-30°C, kJ/m²) | 4.2 | 6.8 | 21 | 6.5 | 5.5 | 7.7 | 6.3 |

IV. Fourth Aspect of the Invention:

The method for producing a propylene-based block copolymer and the propylene-based block copolymer produced in the method both falling within the scope of the fourth aspect of the invention are described in detail in this section, in which the fourth aspect will be simply referred to as "the invention".

[I] Method for Producing Propylene-based Block Copolymer:

The method for producing a propylene-based block copolymer of the invention comprises a step of forming a polypropylene component by polymerizing propylene in the presence of an olefin polymerization catalyst comprising (A) a prepolymerized catalyst component prepared by prepolymerizing an olefin in the presence of (a) a solid catalyst component containing titanium, magnesium, halogen and an electron donor, (b) an organometallic compound and (c) an organosilicon compound having an Si-O-C bonding structure, (B) an organometallic compound, and (C) an organosilicon compound of the following general formula (IV-1), and a step of forming an ethylene/propylene copolymer component by copolymerizing ethylene and propylene still in the presence of the catalyst:

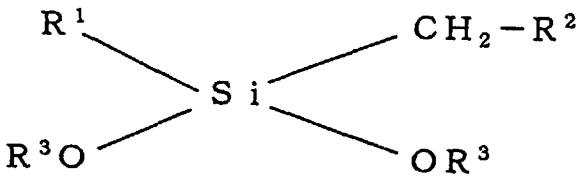

(IV-1)

wherein $R^1$ indicates an alicyclic hydrocarbon group having from 3 to 12 carbon atoms; $R^2$ indicates a branched hydrocarbon group having from 3 to 20 carbon atoms; and $R^3$ indicates a hydrocarbon group having from 1 to 20 carbon atoms.

The catalyst components are described below.

(A) Prepolymerized Catalyst Component:

The prepolymerized catalyst component (A) is prepared by prepolymerizing an olefin in the presence of a solid catalyst component (a), an organometallic component (b) and an organosilicon compound (c) having an Si-O-C bonding structure, which are described in detail hereinunder.

(a) Solid Catalyst Component:

The solid catalyst component contains titanium, magnesium, halogen and an electron donor. For the details of the component, referred to are those described in the section of the first aspect of the invention.

(b) Organometallic Compound:

The organometallic compound for use herein is not specifically defined. For its details, referred to are those described in the section of the first aspect of the invention.

(c) Organosilicon Compound with Si-O-C bonding structure:

The organosilicon compound having an Si-O-C bonding structure for the component (c) is not specifically defined. For this, preferred are organosilicon compounds of formula (IV-1) which will be mentioned hereinunder, and also dicyclopentyldimethoxysilane, cyclopentylethyldimethoxysilane, cyclopentylisopropyldimethoxysilane, cyclopentyl-tert-butyldimethoxysilane, thexylcyclopentyldimethoxysilane, thexylcyclohexyldimethoxysilane, diisopropyldimethoxysilane, diisobutyldimethoxysilane, and di-tert-butyldimethoxysilane. More preferred are the organosilicon compounds of formula (VI-1) and dicyclopentyldimethoxysilane. Even more preferred are cyclohexylisobutyldimethoxysilane, cyclopentylisobutyldimethoxysilane, and dicyclopentyldimethoxysilane.

An olefin is prepolymerized in the presence of these components (a), (b) and (c) to give the component (A). The olefin is not specifically defined. For its details, referred to are those described in the section of the first aspect of the invention.

For the details of olefin prepolymerization to give the component (A), also referred to are those described in

the part (A) Solid Catalyst Component in the section of the first aspect of the invention.

(B) Organometallic Compound:

For the organometallic compounds for the component (B), referred to are those for the component (b) mentioned hereinabove.

(C) Organosilicon Compound:

The component (C) is an organosilicon compound of the following general formula (VI-1):

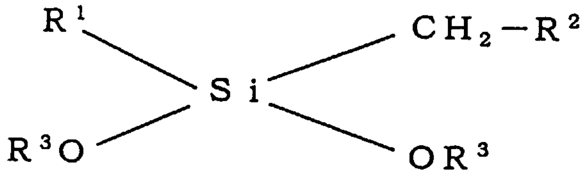

(IV-1)

wherein $R^1$ indicates an alicyclic hydrocarbon group having from 3 to 12 carbon atoms; $R^2$ indicates a branched hydrocarbon group having from 3 to 20 carbon atoms; and $R^3$ indicates a hydrocarbon group having from 1 to 20 carbon atoms.

Concretely, $R^1$ is an alicyclic hydrocarbon group having from 3 to 12 carbon atoms, such as a cyclopropyl group, a cyclobutyl group, a cyclopentyl group, a cyclohexyl group, a cycloheptyl group, a cyclooctyl group, a 1-norbornyl group, a 2-norbornyl group, etc. For this, especially preferred is a cyclopentyl group or a cyclohexyl group. $R^2$ is a branched hydrocarbon group having from 3 to 20 carbon atoms, such as an isopropyl group, an isobutyl group, a sec-butyl group, a t-butyl group, a neopentyl group, etc. Preferably, it is an isopropyl group. $R^3$ includes an alkyl group such as a methyl group, an ethyl group, a propyl group, an isopropyl group, a butyl group, an isobutyl group, a hexyl group, an octyl group, etc.; a cyclohexyl group; an alkenyl group such as an allyl group, a propenyl group, a butenyl group, etc.; an aryl group such as a phenyl group, a tolyl group, a xylyl group, etc.; and an aralkyl group such as a phenethyl group, a 3-phenylpropyl group, etc. Of these, especially preferred for $R^3$ are alkyl groups having from 1 to 10 carbon atoms.

For the details of the organosilicon compound of formula (IV-1), referred to are those described in the part of "(c) Organosilicon Compound of Formula (I-1)" in (A) Solid Catalyst Component in the section of the first aspect of the invention.

The organosilicon compound for the component (C) can be produced in any desired manner. For the details of the specific production route for the compound, also referred to are those described in the part of "(c) Organosilicon Compound of Formula (I-1)" in (A) Solid Catalyst Component in the section of the first aspect of the invention.

The organosilicon compounds mentioned above may be used herein either singly or as combined.

The method for producing a propylene-based block copolymer of the invention comprises a step of forming a polypropylene component by polymerizing propylene in the presence of the olefin polymerization catalyst mentioned above and a step of forming an ethylene/propylene copolymer component by copolymerizing ethylene and propylene still in the presence of the catalyst.

In the method, the amount of the catalyst to be used is not specifically defined. In general, the amount of the solid catalyst component (A) to be used may fall between 0.0005 and 1 mmol, in terms of the titanium atom therein, per liter of the reaction capacity. For the amount of the organometallic compound (B) to be used, the atomic ratio, metal/titanium may fall generally between 1 and 1000, but preferably between 10 and 500. If the atomic ratio oversteps the defined range, the catalyst activity will be low. For the amount of the organosilicon compound (C) to be used, the molar ratio, organosilicon compound (C)/organometallic compound (B) may fall generally between 0.02 and 2.0, but preferably between 0.05 and 1.0. If the molar ratio oversteps the defined range, the catalyst activity will also be low.

The mode of polymerization for the method of the invention is not specifically defined. For its details, for example, referred to are those described in the section of the third aspect of the invention. In the step of forming the copolymer segments in the method of the invention, ethylene alone may be used for the comonomer, but if desired, it may be combined with any other $\alpha$-olefins except ethylene and propylene, such as those mentioned hereinabove. If further desired, dienes such as butadiene, etc., and any other olefins may also be used in the copolymerization stage.

For the condition in the step of propylene homopolymerization, the polymerization pressure and the polymerization time are not specifically defined. For their details, referred to are those described in the section of the third aspect of the invention.

For the condition in the step of propylene/ethylene copolymerization, the polymerization pressure and the

polymerization time are not also specifically defined. For their details, also referred to are those described in the section of the third aspect of the invention. Regarding the ratio of ethylene and propylene to be fed in this step, the molar ratio of ethylene/propylene may fall between 0.01 and 9, preferably between 0.05 and 2.3.

The molecular weight of the propylene homopolymer component and the copolymer component of the block copolymer to be produced can be controlled by adding a chain transfer agent to the polymerization system, preferably hydrogen thereto. If desired, an inert gas such as nitrogen or the like may be present in the polymerization system. According to the copolymer production method using the catalyst of the invention, it is easy to produce propylene-based block copolymers having high melt fluidity even though a smaller amount of hydrogen is added to the polymerization system than that to be added to the polymerization system using a conventional catalyst that comprises magnesium, titanium, halogen and an electron donor. For example, in the step of producing the propylene homopolymer component, the relationship between the limiting viscosity [η] (dl/g) of the propylene homopolymer measured in a solvent of tetralin at 135°C and the ratio of hydrogen partial pressure (MPa)/total pressure (MPa) in the polymerization system preferably satisfies the following:

$$[\eta] \leq -2.7975 \times ([\text{hydrogen partial pressure}]/[\text{total pressure}]) + 1.80,$$

more preferably,

$$[\eta] \leq -2.7975 \times ([\text{hydrogen partial pressure}]/[\text{total pressure}]) + 1.68.$$

Accordingly, the molecular weight of the copolymer component is easy to increase, and, as a result, the block copolymer obtained has the advantages of high stiffness and high impact resistance.

Regarding the catalyst components for use in the invention, the component (A), the component (B) and the component (C) may be previously blended in a pre-determined ratio so that they are contacted with each other, and immediately propylene may be applied thereto to start its polymerization. Alternatively, after the catalyst components have been contacted with each other, the resulting catalyst may be ripened for 0.2 to 3 hours or so, and thereafter propylene may be applied thereto and polymerized in the presence of the thus-ripened catalyst. If desired, the catalyst components may be previously suspended in and diluted with an inert solvent or propylene, and then fed into the polymerization system.

In the invention, the post-treatment after polymerization may be effected in any ordinary manner. For the details of the post-treatment, referred to are those described in the section of the first aspect of the invention.

[II] Propylene-based Block Copolymer:

The propylene-based block copolymer of the invention is produced according to the above-mentioned copolymer production method. The propylene-based block copolymer may have a melt flow rate (MFR), measured at 230°C under 2.16 kg according to JIS-K7210, of from 0.01 to 1000 (g/10 min), preferably from 0.1 to 500. Its Mw/Mn measured through gel permeation chromatography generally falls between 3.5 and 5.0, preferably between 3.5 and 4.5. It is desirable that the propylene-based block copolymer satisfies the following requirement with respect to the peak temperature Y (°C) in the elution curve of the crystalline component obtained in programmed-temperature fractionation and the limiting viscosity [η] (dl/g) of the polypropylene component measured in a solvent of tetralin at 135°C.

$$Y \geq 1.505 \times [\eta] + 116.0.$$

The polypropylene component of the copolymer is meant to include the propylene homopolymer segments formed in the step of propylene homopolymerization. Its [η] preferably falls between 0.7 and 3.0 (dl/g). Its Y is preferably not lower than 117.1°C.

Preferably, the amount of the room-temperature (25°C) xylene-soluble component (this will be referred to as amorphous component) of the propylene-based block copolymer of the invention falls between 5 and 50 % by weight, more preferably between 15 and 35 % by weight. Also preferably, the ethylene content of the amorphous component of the copolymer falls between 15 and 50 % by weight, more preferably between 25 and 45 % by weight.

The invention is described in more detail with reference to the following Examples, which, however, are not intended to restrict the scope of the invention.

For the details of the methods for polymer evaluation mentioned below, referred to are those described in the section of the third aspect of the invention.

(1) Measurement of melt flow rate (MFR).
(2) Measurement of [η].

(3) Peak temperature in elution curve in programmed-temperature fractionation.

(4) Measurement of the amount of room-temperature xylene-soluble component.

(5) Measurement of the ethylene content of the room-temperature (25°C) xylene-soluble component through $^{13}C$-NMR.

(6) Measurement of impact resistance strength.

(7) Measurement of flexural modulus.

Example IV-1:

Preparation of Solid Catalyst Component:

This is the same as in the section of "Preparation of Solid Catalyst Component" in Example I-1 for the first aspect of the invention.

Prepolymerization:

In the same manner as in the section of "Prepolymerization" in Example I-1 for the first aspect, prepared was the catalyst A.

Polymerization:

A stainless autoclave having a capacity of 5 liters and equipped with a stirrer was fully dried with nitrogen gas and then purged with propylene gas. This was kept heated at 70 °C, and propylene gas was introduced thereinto to have an increased pressure of 0.05 MPa (gauge). In that condition, hydrogen gas was introduced thereinto to have an increased pressure of 0.48 MPa (gauge), and propylene gas was further introduced thereinto so that its pressure could increase gradually up to 2.8 MPa (gauge). On the other hand, 20 ml of heptane, 4 mmols of triethylaluminium, 1 mmol of cyclohexylisobutyldimethoxysilane (CyiBuSi) and 0.02 mmols, in terms of the Ti atom therein, of the catalyst A were metered in a 60 ml catalyst supply tube having been purged with nitrogen gas, and these were all put into the autoclave, in which propylene was polymerized for 60 minutes in the presence of these. Next, the autoclave was degassed to have an atmospheric pressure, and the polymer therein was sampled in a nitrogen atmosphere. The sample is for measuring its limiting viscosity [η]. Then, the autoclave was again degassed in vacuum. Next, ethylene gas/propylene gas in a ratio of 4.7/5.3 by mol was introduced into the autoclave to have an increased pressure of 1 MPa, and kept under the increased pressure of 1 MPa at 70°C for 20 minutes to attain propylene-ethylene copolymerization. After this, the autoclave was degassed to have an atmospheric pressure and cooled down to room temperature. In that condition, the autoclave was opened, and the polymer powder formed was taken out of it. To the thus-obtained block polypropylene powder, added were 1000 ppm of calcium stearate (from Nippon Yushi) and 1500 ppm of DHT-4A (from Kyowa Chemical) both serving as a neutralizing agent, 750 ppm of P-EPQ (from Clariant) and 1500 ppm of Irganox 1010 (from Ciba Speciality Chemicals) both serving as an antioxidant, and 2000 ppm of PTBBA-A1 (from Dai-Nippon Ink Chemical Industry) serving as a nucleating agent, and well blended. The resulting mixture was kneaded in melt and pelletized through a 20 mm∅ single-screw melt extruder into pellets. A part of the pellets were subjected to the predetermined structural analysis tests. The remaining pellets were molded through injection into test pieces, which were tested for their physical properties. The test data are given in Table IV-1 (in this, "Example IV-1" is simply designated by "Example 1", and the same shall apply to Comparative Examples).

Example IV-2:

The same process as in Example IV-1 was repeated, except that the time for the second stage copolymerization was 40 minutes.

Example IV-3:

The same process as in Example IV-1 was repeated, except that the time for the first stage polymerization was 30 minutes.

Example IV-4:

The same process as in Example IV-1 was repeated, except that the molar ratio of ethylene/propylene was 2.7/7.3 and the polymerization time was 60 minutes in the second stage copolymerization.

Comparative Example IV-1:

The same process as in Example IV-1 was repeated, except that cyclohexylmethyldimethoxysilane (CyMe) and not cyclohexylisobutyldimethoxysilane was used for the organosilicon compound both in prepolymerization and in essential polymerization, that the hydrogen pressure in the first stage homopolymerization to form propylene homopolymer was 0.55 MPa (gauge), and that the time for the second stage copolymerization was 40 minutes.

Comparative Example IV-2:

The same process as in Comparative Example IV-1 was repeated, except that the time for the second stage copolymerization was 70 minutes.

Comparative Example IV-3:

The same process as in Example IV-2 was repeated, except that dicyclopentyldimethoxysilane (Cyp2) and not cyclohexylisobutyldimethoxysilane was used for the organosilicon compound both in prepolymerization and in essential polymerization.

Table IV-1

| | Example 1 | Example 2 | Example 3 | Example 4 | Comp. Ex. 1 | Comp. Ex. 2 | Comp. Ex. 3 |
|---|---|---|---|---|---|---|---|
| Electron Donor | DNBP | DNBP | DNBP | DNBP | DNBP | DNBP | DNBP |
| Organosilicon Compound in Prepolymerization | CyiBuSi | CyiBuSi | CyiBuSi | CyiBuSi | CyMe | CyMe | Cyp2 |
| Time for 1st stage polymerization (min) | 60 | 60 | 30 | 60 | 60 | 60 | 60 |
| Temperature in 1st stage polymerization (°C) | 70 | 70 | 70 | 70 | 70 | 70 | 70 |
| Hydrogen Pressure in 1st stage polymerization (MPa) | 0.48 | 0.48 | 0.48 | 0.48 | 0.55 | 0.55 | 0.48 |
| Total Pressure in 1st stage polymerization (MPa) | 2.8 | 2.8 | 2.8 | 2.8 | 2.8 | 2.8 | 2.8 |
| Catalyst (mmol) | 0.02 | 0.02 | 0.02 | 0.02 | 0.02 | 0.02 | 0.02 |
| Triethylaluminium (mmol) | 4.0 | 4.0 | 4.0 | 4.0 | 4.0 | 4 | 4 |
| Organosilicon Compound in Polymerization (mmol) | CyiBuSi | CyiBuSi | CyiBuSi | CyiBuSi | CyMe | CyMe | Cyp2 |
| | 1.0 | 1.0 | 1.0 | 1.0 | 1.0 | 1.0 | 1.0 |
| Time for 2nd stage polymerization (min) | 20 | 40 | 40 | 60 | 40 | 70 | 40 |
| Temperature in 2nd stage polymerization (°C) | 70 | 70 | 70 | 70 | 70 | 70 | 70 |
| Ethylene/Propylene (by mol) in 2nd stage polymerization | 4.7/5.3 | 4.7/5.3 | 4.7/5.3 | 2.7/7.3 | 5.5/4.5 | 5.5/4.5 | 4.7/5.3 |
| Total Pressure in 2nd stage polymerization (MPa) | 1.0 | 1.0 | 1.0 | 1.0 | 1.0 | 1.0 | 1.0 |
| MFR (g/10 min) | 31.4 | 30.5 | 32.1 | 31.8 | 29.8 | 30.9 | 14.8 |
| [η] (dl/g) | 1.21 | 1.22 | 1.19 | 1.23 | 1.2 | 1.22 | 1.52 |
| Y (°C) | 119.5 | 119.3 | 119.4 | 119.3 | 117.1 | 117.3 | 119.8 |
| 1.505 × [η] + 116.0 | 117.8 | 117.8 | 117.8 | 117.9 | 117.8 | 117.8 | 118.3 |
| Amount of Amorphous Component (wt.%) | 15.6 | 22.5 | 30.3 | 22.4 | 22.3 | 30.7 | 21.9 |
| Ethylene Content of Amorphous Component (wt.%) | 40.5 | 42 | 40.6 | 24.6 | 41.9 | 40.3 | 41 |
| Flexural Modulus (MPa) | 1450 | 1199 | 905 | 1189 | 990 | 705 | 1065 |
| Izod Impact Strength (23°C, kJ/m²) | 7.5 | 14.6 | 66.2 | 21.2 | 6.6 | 30.6 | 15.1 |
| Izod Impact Strength (-30°C, kJ/m²) | 3.8 | 6.6 | 20.2 | 6.1 | 5.5 | 7.7 | 6.3 |

V. Fifth Aspect of the Invention:

The method for producing a propylene-ethylene random copolymer and the propylene-ethylene random copolymer produced in the method both falling within the scope of the fifth aspect of the invention are described in detail in this section.

[I] Method for Producing Propylene-ethylene Random Copolymer:

The method for producing a propylene-ethylene random copolymer of the invention comprises copolymerizing propylene and ethylene in the presence of the olefin polymerization catalyst of the first aspect of the invention.
In the method, the amount of the catalyst to be used is not specifically defined. In general, the amount of the solid catalyst component (A) to be used may fall between 0.0005 and 1 mmol, in terms of the titanium atom therein, per liter of the reaction capacity. For the amount of the organometallic compound (B) to be used, the atomic ratio, metal/titanium may fall generally between 1 and 1000, but preferably between 10 and 500. If the atomic ratio oversteps the defined range, the catalyst activity will be low. For the amount of the organosilicon compound (C) to be used, the molar ratio, organosilicon compound (C)/organometallic compound (B) may fall generally between 0.02 and 2.0, but preferably between 0.05 and 1.0. If the molar ratio oversteps the defined range, the catalyst activity will also be low.
In the method of the invention, if desired, a small amount of other α-olefins except propylene and ethylene may be used for additional comonomers. If further desired, dienes such as butadiene, etc., and any other olefins may also be used.
The mode of polymerization in the olefin polymer production method of the invention is not specifically defined. The polymerization may be effected in any mode of batch polymerization or continuous polymerization. As the case may be, two-stage or more multi-stage polymerization in which the plural stages are effected under different conditions may apply thereto.
For the condition for polymerization in the method of the invention, the polymerization pressure is not specifically defined and may fall generally between atmospheric pressure and 8 MPa (gauge), but preferably between 0.2 and 5 MPa (gauge); the polymerization temperature may fall generally between 0 and 200°C, but preferably between 30 and 100°C. The polymerization time shall vary, depending on the blend ratio of the starting propylene and ethylene and on the polymerization temperature, and could not be indiscriminately defined. In general, however, it may fall between 5 minutes and 20 hours, preferably between 10 minutes and 10 hours or so. The molecular weight of the polymer to be produced can be controlled by adding a chain transfer agent to the polymerization system, preferably hydrogen thereto. If desired, an inert gas such as nitrogen or the like may be present in the polymerization system. The ethylene partial pressure in the polymerization system should be controlled by changing the amount of ethylene to be fed into the system, so that the copolymer produced could have a predetermined ethylene unit content.
Regarding the catalyst components for use in the invention, the component (A), the component (B) and the component (C) may be previously blended in a pre-determined ratio so that they are contacted with each other, and immediately olefins may be applied thereto to start their polymerization. Alternatively, after the catalyst components have been contacted with each other, the resulting catalyst may be ripened for 0.2 to 3 hours or so, and thereafter propylene and ethylene may be applied thereto and polymerized in the presence of the thus-ripened catalyst. If desired, the catalyst components may be previously suspended in and diluted with an inert solvent or propylene, and then fed into the polymerization system.
In the invention, the post-treatment after polymerization may be effected in any ordinary manner. For the details of the post-treatment, referred to are those described in the section of the first aspect of the invention.

[II] Propylene-ethylene Random Copolymer:

The propylene-ethylene random copolymer of the invention is produced according to the above-mentioned copolymer production method. Preferably, the 0°C-soluble content, $Y_0$, of the copolymer measured in programmed-temperature fractionation is at most 5 % by weight, as the copolymer satisfying the requirement is not sticky. If its 0°C-soluble content is larger than 5 % by weight, the copolymer will be sticky. More preferably, the 0°C-soluble content of the copolymer is at most 4 % by weight, even more preferably at most 3 % by weight, most preferably at most 2 % by weight. When the propylene-ethylene random copolymer of the invention is compared with conventional ones having the same ethylene unit content, $Y_0$ of the former is smaller by at least 80 % than that of the latter. Therefore, the copolymer of the invention is less sticky than conventional ones. The ethylene unit content of the copolymer of the invention is not specifically defined, but is generally at most 15 % by weight, preferably at most 12 % by weight, more preferably at most 10 % by weight, most preferably at most 7 % by weight. If its ethylene unit content is larger than 15 % by weight, the copolymer will be sticky. Especially preferably, the 0°C-soluble content $Y_0$ (% by weight) of the copolymer of the invention measured in programmed-temperature fractionation and the ethylene content X (% by weight) thereof satisfy

the following requirement:

$$Y_0 < 0.3734\exp(0.3811X) + 116.0.$$

The propylene-ethylene random copolymer of the invention may have a melt flow rate (MFR), measured at 230 °C under 2.16 kgf (21.2 N) according to JIS-K7210, of from 0.01 to 1000 (g/10 min), preferably from 0.1 to 500. If its MFR oversteps the range of from 0.01 to 1000 (g/10 min), the moldability of the copolymer will be poor and the strength of the films of the copolymer will be low. The ratio of Mw/Mn of the copolymer, measured through gel permeation chromatography, generally falls between 3.5 and 5.0, preferably between 3.5 and 4.5. If its ratio Mw/Mn oversteps the range of from 3.5 to 5.0, the copolymer will be sticky.

Preferably, the propylene-ethylene random copolymer of the invention satisfies the following requirement with respect to its peak top temperature Tp (°C) in programmed-temperature fractionation and its ethylene content X (% by weight):

$$Tp < -2.5X + 113.4 \text{ (where } 0 < X \leq 12).$$

Satisfying the requirement, the copolymer is not sticky.

The invention is described in more detail with reference to the following Examples, which, however, are not intended to restrict the scope of the invention.

(1) Measurement of melt flow rate (MFR):

Measured at 230°C under 2.16 kgf (21.2 N) according to JIS-K7210.

(2) Measurement of [η]:

Measured in a solvent of tetralin at 135°C, using an automatic viscometer, Rigo's VMR-053 Model.

(3) 0°C-soluble content and peak temperature in elution curve in programmed-temperature fractionation:

The propylene-ethylene random copolymer prepared through polymerization is subjected to temperature-programmed fractionation. For the details of the sample preparation, the 0°C-soluble content and the elution curve in the temperature-programmed fractionation, referred to are those described in the section of the third aspect of the invention. The temperature for the peak of the elution curve obtained is read, and it is the peak temperature in the elution curve of the crystalline component of the copolymer. For the details of the column, the filler, the elution curve calibration and the detector in the temperature-programmed fractionation, also referred to are those described in the section of the third aspect of the invention.

(4) Measurement of ethylene content through $^{13}$C-NMR:

The ethylene unit content of the copolymer is obtained according to the following method. A sample is subjected to $^{13}$C-NMR according to the process mentioned below, and its $^{13}$C-NMR spectrum is analyzed. From the intensity of 7 peaks appearing in the region of from 21 to 35 ppm [based on the standard of tetramethylsilane (TMS) chemical shift] in the $^{13}$C-NMR spectrum of the sample, the triad chain fraction (mol%) of ethylene (E) and propylene (P) is calculated according to the following formulae:

$$f_{EPE} = [K(T\delta\delta)/T] \times 100,$$

$$f_{PPE} = [K(T\beta\delta)/T] \times 100,$$

$$f_{EEE} = [K(S\gamma\delta)/4T + K(S\delta\delta)/2T] \times 100,$$

$$f_{PPP} = [K(T\beta\beta)/T] \times 100,$$

$$f_{PEE} = [K(S\beta\gamma)/T] \times 100,$$

$$f_{PEP} = [K(S\beta\beta)/T] \times 100,$$

provided that

$$T = K(T\delta\delta) + K(T\beta\delta) + K(S\gamma\delta)/4 + K(S\delta\delta)/2 + K(T\beta\beta) + K(S\ \beta\delta) + K(S\beta\beta),$$

wherein $f_{EPE}$ indicates the EPE triad chain fraction (mol%),
and $K(T\delta\delta)$ indicates the integrated intensity of the peaks assigned to the $T\delta\delta$ carbon.

From the triad chain fraction obtained as above, the ethylene unit content (% by weight) of the sample is calculated according to the following formula:

$$\text{Ethylene unit content (\% by weight)} = 28\{3f_{EEE} + 2(f_{PEE} + f_{EPE}) + f_{PPE} + f_{PEP}\} \times 100/[28[3f_{EEE} + 2(f_{PEE} + f_{EPE}) + f_{PPE} + f_{PEP}] + 42[3f_{PPP} + 2(f_{PPE} + f_{PEP}) + f_{EPE} + f_{PEE}]].$$

〈Process of $^{13}$C-NMR〉

This is the same as that described in the section of the third aspect of the invention.

Example V-1:

Preparation of Solid Catalyst Component:

This is the same as in the section of "Preparation of Solid Catalyst Component" in Example I-1 for the first aspect of the invention.

Prepolymerization:

In the same manner as in the section of "Prepolymerization" in Example I-1 for the first aspect, prepared was the catalyst A.

Polymerization:

A stainless autoclave having a capacity of 1 liter and equipped with a stirrer was fully dried and then purged with nitrogen. 380 ml of dewatered heptane was put into it, and heated up to 80°C with stirring. Propylene, ethylene and hydrogen were introduced into the autoclave at a controlled flow rate (liter/min) of 9.90/0.10/0.814, while being discharged to keep the inner pressure of 0.4 MPa. On the other hand, 20 ml of dewatered heptane, 0.6 mmols of triethylaluminium, 0.075 mmols of dicyclopentyldimethoxysilane (DCPDMS) and 0.0015 mmols, in terms of the Ti atom therein, of the catalyst A were metered in a catalyst supply tube having been fully purged with nitrogen, and these were all pushed into the autoclave under nitrogen pressure. In that condition, the monomers were polymerized at 80°C for 1 hour while the inner pressure was kept at 0.4 MPa. The reaction was stopped with methanol added to the reaction system, and the reaction mixture was taken out into methanol and then dried in vacuum to obtain a propylene-ethylene random copolymer. The data of the copolymer thus obtained and the polymerization condition are shown in Table V-1 (in this, "Example V-1" is simply designated by "Example 1", and the same shall apply to Comparative Examples).

Example V-2:

The same process as in Example V-1 was repeated, except that the propylene flow rate was 9.83 (liter/min), the ethylene flow rate was 0.17 (liter/min), and the hydrogen flow rate was 0.72 (liter/min). The data of the copolymer obtained and the polymerization condition are shown in Table V-1.

Example V-3:

The same process as in Example V-1 was repeated, except that the propylene flow rate was 9.69 (liter/min), the ethylene flow rate was 0.31 (liter/min), and the hydrogen flow rate was 0.81 (liter/min). The data of the copolymer obtained and the polymerization condition are shown in Table V-1.

Comparative Example V-1:

The same process as in Example V-1 was repeated, except that the donor compound in prepolymerization was cyclohexylmethyldimethoxysilane (CHMDMS) and not cyclohexylisobutyldimethoxysilane (CyiBuSi), that the donor compound in polymerization was cyclohexylmethyldimethoxysilane (CHMDMS) and not dicyclopentyldimethoxysilane (DCPDMS), and that the propylene flow rate was 9.89 (liter/min), the ethylene flow rate was 0.11 (liter/min), and the hydrogen flow rate was 0.09 (liter/min). The data of the copolymer obtained and the polymerization condition are shown in Table V-1.

Comparative Example V-2:

The same process as in Example V-1 was repeated, except that the donor compound in prepolymerization was cyclohexylmethyldimethoxysilane (CHMDMS) and not cyclohexylisobutyldimethoxysilane (CyiBuSi), that the donor compound in polymerization was cyclohexylmethyldimethoxysilane (CHMDMS) and not dicyclopentyldimethoxysilane (DCPDMS), and that the propylene flow rate was 9.78 (liter/min), the ethylene flow rate was 0.22 (liter/min), and the hydrogen flow rate was 0.09 (liter/min). The data of the copolymer obtained and the polymerization condition are shown in Table V-1.

Table V-1

| | | | Example 1 | Example 2 | Example 3 | Comp. Ex. 1 | Comp. Ex. 2 |
|---|---|---|---|---|---|---|---|
| Solid Catalyst Component | Internal Donor | | DNBP | DNBP | DNBP | DNBP | DNBP |
| Pre-polymerization | Organosilicon Compound in Prepolymerization | | CyiBuSi | CyiBuSi | CyiBuSi | CHMDMS | CHMDMS |
| Copolymerization | Polymerization Time | min | 60 | 60 | 60 | 60 | 60 |
| | Polymerization Temperature | °C | 80 | 80 | 80 | 80 | 80 |
| | Propylene Flow Rate | liter/min | 9.9 | 9.83 | 9.69 | 9.89 | 9.78 |
| | Ethylene Flow Rate | liter/min | 0.1 | 0.17 | 0.31 | 0.11 | 0.22 |
| | Hydrogen Flow Rate | liter/min | 0.814 | 0.72 | 0.81 | 0.09 | 0.09 |
| | Total Pressure | MPa | 0.4 | 0.4 | 0.4 | 0.4 | 0.4 |
| | Catalyst (Ti) | mmol | 0.0015 | 0.0015 | 0.0015 | 0.0015 | 0.0015 |
| | Triethylaluminium | mmol | 0.6 | 0.6 | 0.6 | 0.6 | 0.6 |
| | Organosilicon Compound in Copolymerization | type | DCPDMS | DCPDMS | DCPDMS | CHMDMS | CHMDMS |
| | | mmol | 0.075 | 0.075 | 0.075 | 0.075 | 0.075 |
| Copolymerization Data | Activity | kg/g-Ti | 720 | 1169 | 1720 | 670 | 900 |
| | Ethylene Content | wt.% | 1.1 | 2.1 | 4.2 | 2.3 | 4.3 |
| | [η] | dl/g | 1.72 | 1.68 | 1.62 | 1.69 | 1.76 |
| | 0°C-soluble Content $Y_0$ | wt.% | 0.63 | 0.85 | 1.32 | 5.79 | 8.91 |
| | Calculated 1 | | 4.6 | 4.8 | 5.9 | 4.9 | 5.9 |
| | Peak Top Temperature Tp | °C | 108.2 | 102.56 | 90.51 | 106.75 | 101.78 |
| | Calculated 2 | | 110.65 | 108.15 | 102.9 | 107.65 | 102.65 |

Calculated 1 = 0.3734exp(0.3811X) + 116.0

Calculated 2 = -2.5X + 113.4

VI. Sixth Aspect of the Invention:

The method for producing a propylene-ethylene random copolymer and the propylene-ethylene random copolymer produced in the method both falling within the scope of the sixth aspect of the invention are described in detail in this section, in which the sixth aspect will be simply referred to as "the invention".

[I] Method for Producing Propylene-ethylene Random Copolymer:

The method for producing a propylene-ethylene random copolymer of the invention comprises copolymerizing propylene and ethylene in the presence of the olefin polymerization catalyst of the fourth aspect of the invention.

In the method, the amount of the catalyst to be used is not specifically defined. In general, the amount of the solid catalyst component (A) to be used may fall between 0.0005 and 1 mmol, in terms of the titanium atom therein, per liter of the reaction capacity. For the amount of the organometallic compound (B) to be used, the atomic ratio, metal/titanium may fall generally between 1 and 1000, but preferably between 10 and 500. If the atomic ratio oversteps the defined range, the catalyst activity will be low. For the amount of the organosilicon compound (C) to be used, the molar ratio, organosilicon compound (C)/organometallic compound (B) may fall generally between 0.02 and 2.0, but preferably between 0.05 and 1.0. If the molar ratio oversteps the defined range, the catalyst activity will also be low.

In the method of the invention, if desired, a small amount of other α-olefins except propylene and ethylene may be used for additional comonomers. If further desired, dienes such as butadiene, etc., and any other olefins may also be used.

For the details of the mode of polymerization, the polymerization pressure, the polymerization time, the molecular weight control in the olefin polymer production method of the invention, referred to are those described in the section of the fifth aspect of the invention. In the method, the ethylene partial pressure in the polymerization system should be controlled by changing the amount of ethylene to be fed into the system, so that the copolymer produced could have a predetermined ethylene unit content.

Regarding the catalyst components for use in the invention, the component (A), the component (B) and the component (C) may be previously blended in a pre-determined ratio so that they are contacted with each other, and immediately olefins may be applied thereto to start their polymerization. Alternatively, after the catalyst components have been contacted with each other, the resulting catalyst may be ripened for 0.2 to 3 hours or so, and thereafter propylene and ethylene may be applied thereto and polymerized in the presence of the thus-ripened catalyst. If desired, the catalyst components may be previously suspended in and diluted with an inert solvent or propylene, and then fed into the polymerization system.

In the invention, the post-treatment after polymerization may be effected in any ordinary manner. For the details of the post-treatment, referred to are those described in the section of the first aspect of the invention.

[II] Propylene-ethylene Random Copolymer:

The propylene-ethylene random copolymer of the invention has a 0°C-soluble content, $Y_0$, measured in programmed-temperature fractionation, of at most 5 % by weight, and is not sticky. If its 0°C-soluble content is larger than 5 % by weight, the copolymer is sticky and is therefore unfavorable. More preferably, the 0°C-soluble content of the copolymer is at most 4 % by weight, even more preferably at most 3 % by weight, most preferably at most 2 % by weight. When the propylene-ethylene random copolymer of the invention is compared with conventional ones having the same ethylene unit content, $Y_0$ of the former is smaller by at least 80 % than that of the latter. Therefore, the copolymer of the invention is less sticky than conventional ones. The ethylene unit content of the copolymer of the invention is not specifically defined, but is generally at most 15 % by weight, preferably at most 12 % by weight, more preferably at most 10 % by weight, most preferably at most 7 % by weight. If its ethylene unit content is larger than 15 % by weight, the copolymer will be sticky. Especially preferably, the 0°C-soluble content $Y_0$ (% by weight) of the copolymer of the invention measured in programmed-temperature fractionation and the ethylene content X (% by weight) thereof satisfy the following requirement:

$$Y_0 < 0.3734\exp(0.3811X) + 116.0.$$

The propylene-ethylene random copolymer of the invention may have a melt flow rate (MFR), measured at 230 °C under 2.16 kgf (21.2 N) according to JIS-K7210, of from 0.01 to 1000 (g/10 min), preferably from 0.1 to 500. If its MFR oversteps the range of from 0.01 to 1000 (g/10 min), the moldability of the copolymer will be poor and the strength of the films of the copolymer will be low. The ratio of Mw/Mn of the copolymer, measured through gel permeation chromatography, generally falls between 3.5 and 5.0, preferably between 3.5 and 4.5. If its ratio Mw/Mn oversteps the range of from 3.5 to 5.0, the copolymer will be sticky.

Preferably, the propylene-ethylene random copolymer of the invention satisfies the following requirement with respect to its peak top temperature Tp (°C) in programmed-temperature fractionation and its ethylene content X (% by weight):

$$Tp < -2.5X + 113.4 \text{ (where } 0 < X \leq 12).$$

Satisfying the requirement, the copolymer is not sticky.

Preferably, the propylene-ethylene random copolymer of the invention is produced according to the method mentioned above.

The invention is described in more detail with reference to the following Examples, which, however, are not intended to restrict the scope of the invention.

For the details of the methods for polymer evaluation mentioned below, referred to are those described in the section of the fifth aspect of the invention.

(1) Measurement of melt flow rate (MFR):
(2) Measurement of [η]:
(3) 0°C-soluble content and peak temperature in elution curve in programmed-temperature fractionation:
(4) Measurement of ethylene content through $^{13}$C-NMR:

Example VI-1:

Preparation of Solid Catalyst Component:

This is the same as in the section of "Preparation of Solid Catalyst Component" in Example I-1 for the first aspect of the invention.

Prepolymerization:

In the same manner as in the section of "Prepolymerization" in Example I-1 for the first aspect, prepared was the catalyst A.

Polymerization:

A stainless autoclave having a capacity of 1 liter and equipped with a stirrer was fully dried and then purged with nitrogen. 380 ml of dewatered heptane was put into it, and heated up to 80°C with stirring. Propylene, ethylene and hydrogen were introduced into the autoclave at a controlled flow rate (liter/min) of 9.90/0.10/0.814, while being discharged to keep the inner pressure of 0.4 MPa. On the other hand, 20 ml of dewatered heptane, 0.6 mmols of triethylaluminium, 0.075 mmols of cyclohexylisobutyldimethoxysilane (CyiBuSi) and 0.0015 mmols, in terms of the Ti atom therein, of the prepolymerized catalyst A were metered in a catalyst supply tube having been fully purged with nitrogen, and these were all pushed into the autoclave under nitrogen pressure. In that condition, the monomers were polymerized at 80°C for 1 hour while the inner pressure was kept at 0.4 MPa. The reaction was stopped with methanol added to the reaction system, and the reaction mixture was taken out into methanol and then dried in vacuum to obtain a propylene-ethylene random copolymer. The data of the copolymer thus obtained and the polymerization condition are shown in Table VI-1 (in this, "Example VI-1" is simply designated by "Example 1", and the same shall apply to Comparative Examples).

Example VI-2:

The same process as in Example VI-1 was repeated, except that the propylene flow rate was 9.83 (liter/min), the ethylene flow rate was 0.17 (liter/min), and the hydrogen flow rate was 0.72 (liter/min). The data of the copolymer obtained and the polymerization condition are shown in Table VI-1.

Example VI-3:

The same process as in Example VI-1 was repeated, except that the propylene flow rate was 9.69 (liter/min), the ethylene flow rate was 0.31 (liter/min), and the hydrogen flow rate was 0.81 (liter/min). The data of the copolymer obtained and the polymerization condition are shown in Table VI-1.

Comparative Example VI-1:

The same process as in Example VI-1 was repeated, except that the donor compound in prepolymerization and polymerization was cyclohexylmethyldimethoxysilane (CHMDMS) and not cyclohexylisobutyldimethoxysilane (CyiBuSi), and that the propylene flow rate was 9.89 (liter/min), the ethylene flow rate was 0.11 (liter/min), and the hydrogen flow rate was 0.09 (liter/min). The data of the copolymer obtained and the polymerization condition are shown in Table VI-1.

Comparative Example VI-2:

The same process as in Example VI-1 was repeated, except that the donor compound in prepolymerization was cyclohexylmethyldimethoxysilane (CHMDMS) and not cyclohexylisobutyldimethoxysilane (CyiBuSi), that the donor compound in polymerization was cyclohexylmethyldimethoxysilane (CHMDMS) and not cyclohexylisobutyldimethoxysilane (CyiBuSi), and that the propylene flow rate was 9.78 (liter/min), the ethylene flow rate was 0.22 (liter/min), and the hydrogen flow rate was 0.09 (liter/min). The data of the copolymer obtained and the polymerization condition are shown in Table VI-1.

Table VI-1

| | | | Example 1 | Example 2 | Example 3 | Comp. Ex. 1 | Comp. Ex. 2 |
|---|---|---|---|---|---|---|---|
| Solid Catalyst Component | Internal Donor | | DNBP | DNBP | DNBP | DNBP | DNBP |
| Pre-polymerization | Organosilicon Compound in Prepolymerization | | CyiBuSi | CyiBuSi | CyiBuSi | CHMDMS | CHMDMS |
| Copolymerization | Polymerization Time | min | 60 | 60 | 60 | 60 | 60 |
| | Polymerization Temperature | °C | 80 | 80 | 80 | 80 | 80 |
| | Propylene Flow Rate | liter/min | 9.9 | 9.83 | 9.69 | 9.89 | 9.78 |
| | Ethylene Flow Rate | liter/min | 0.1 | 0.17 | 0.31 | 0.11 | 0.22 |
| | Hydrogen Flow Rate | liter/min | 0.814 | 0.72 | 0.81 | 0.09 | 0.09 |
| | Total Pressure | MPa | 0.4 | 0.4 | 0.4 | 0.4 | 0.4 |
| | Catalyst (Ti) | mmol | 0.0015 | 0.0015 | 0.0015 | 0.0015 | 0.0015 |
| | Triethylaluminium | mmol | 0.6 | 0.6 | 0.6 | 0.6 | 0.6 |
| | Organosilicon Compound in Copolymerization | type | CyiBuSi | CyiBuSi | CyiBuSi | CHMDMS | CHMDMS |
| | | mmol | 0.075 | 0.075 | 0.075 | 0.075 | 0.075 |
| Copolymerization Data | Activity | kg/g-Ti | 680 | 1050 | 1660 | 670 | 900 |
| | Ethylene Content | wt.% | 1.1 | 2.3 | 4.1 | 2.3 | 4.3 |
| | [η] | dl/g | 1.68 | 1.71 | 1.61 | 1.69 | 1.76 |
| | 0°C-soluble Content $Y_0$ | wt.% | 0.64 | 0.86 | 1.35 | 5.79 | 8.91 |
| | Calculated 1 | | 4.5 | 4.9 | 5.8 | 4.9 | 5.9 |
| | Peak Top Temperature Tp | °C | 108.47 | 102.56 | 90.78 | 106.75 | 101.78 |
| | Calculated 2 | | 110.9 | 107.65 | 103.15 | 107.65 | 102.65 |

Calculated 1 = 0.3734exp(0.3811X) + 116.0

Calculated 2 = -2.5X + 113.4

INDUSTRIAL APPLICABILITY

The present invention provides olefin polymerization catalysts having high activity, with which olefin polymers having high melt fluidity can be produced efficiently by adding only a small amount of hydrogen to the reaction system. In particular, propylene-based block copolymers produced in the presence of such a high-activity catalyst have the advantages of good moldability, good impact resistance and high stiffness. In producing them, the molecular weight and the melt flow rate of the polypropylene component can be readily controlled by adding only a small amount of hydrogen to the reaction system, and the molecular weight of the ethylene/propylene copolymer component can be readily increased. Propylene-ethylene random copolymers also produced in the presence of the catalyst are not sticky, and their films have the advantages of good low-temperature heat-sealability and good impact resistance.

## Claims

1. A catalyst for olefin polymerization, which comprises (A) a prepolymerized catalyst component prepared by prepolymerizing an olefin in the presence of (a) a solid catalyst component containing titanium, magnesium, halogen and an electron donor, (b) an organometallic compound, and (c) an organosilicon compound of the following general formula (I-1), (B) an organometallic compound, and (C) an organosilicon compound having an Si-O-C bonding structure but differing from the compound (c):

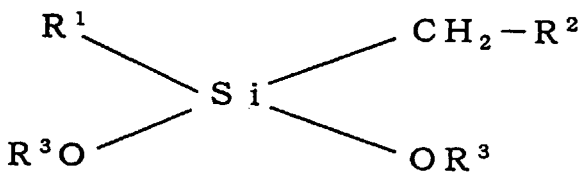

(I-1)

wherein $R^1$ indicates an alicyclic hydrocarbon group having from 3 to 12 carbon atoms; $R^2$ indicates a branched hydrocarbon group having from 3 to 20 carbon atoms; and $R^3$ indicates a hydrocarbon group having from 1 to 20 carbon atoms.

2. The olefin polymerization catalyst as claimed in claim 1, wherein $R^1$ is a cyclohexyl group or a cyclopentyl group.

3. The olefin polymerization catalyst as claimed in claim 1 or 2, wherein the organosilicon compound of formula (I-1) is cyclohexylisobutyldimethoxysilane.

4. The olefin polymerization catalyst as claimed in claim 1 or 2, wherein the organosilicon compound of formula (I-1) is cyclopentylisobutyldimethoxysilane.

5. A method for producing an olefin polymer, which comprises polymerizing an olefin in the presence of the olefin polymerization catalyst of any of claims 1 to 4.

6. An olefin polymer obtained in the olefin polymer production method of claim 5.

7. The olefin polymer as claimed in claim 6, for which the olefin is propylene.

8. The olefin polymer as claimed in claim 7, of which the quantity of endothermic heat of fusion ΔH (J/g) measured through DSC and the limiting viscosity [η] (dl/g) measured in a solvent of tetralin at 135°C satisfy the following requirement:

$$\Delta H > 123.1 \times [\eta]^{-0.079} - 4.5.$$

9. A catalyst for olefin polymerization, which comprises (A) a prepolymerized catalyst component prepared by prepolymerizing an olefin in the presence of (a) a solid catalyst component prepared by contacting titanium tetrachloride, a magnesium compound and a dialkyl phthalate (in which the alkyl groups each are a linear or branched hydrocarbon group having from 3 to 20 carbon atoms) with each other, (b) an organometallic compound, and (c) an organosilicon compound having an Si-O-C bonding structure, (B) an organometallic compound, and (C) an organosilicon compound of the following general formula (II-1):

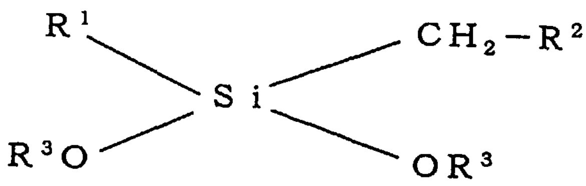

(II-1)

wherein $R^1$ indicates an alicyclic hydrocarbon group having from 3 to 12 carbon atoms; $R^2$ indicates a branched hydrocarbon group having from 3 to 20 carbon atoms; and $R^3$ indicates a hydrocarbon group having from 1 to 20 carbon atoms.

**10.** The olefin polymerization catalyst as claimed in claim 9, wherein the magnesium compound is an alkoxymagnesium.

**11.** The olefin polymerization catalyst as claimed in claim 9 or 10, wherein $R^1$ is a cyclohexyl group or a cyclopentyl group.

**12.** The olefin polymerization catalyst as claimed in any of claims 9 to 11, wherein the organosilicon compound of formula (II-1) is cyclohexylisobutyldimethoxysilane.

**13.** The olefin polymerization catalyst as claimed in any of claims 9 to 11, wherein the organosilicon compound of formula (II-1) is cyclopentylisobutyldimethoxysilane.

**14.** A method for producing an olefin polymer, which comprises polymerizing an olefin in a vapor phase in the presence of the olefin polymerization catalyst of any of claims 9 to 13.

**15.** An olefin polymer obtained in the olefin polymer production method of claim 14.

**16.** The olefin polymer as claimed in claim 15, for which the olefin is propylene.

**17.** The olefin polymer as claimed in claim 16, of which the quantity of endothermic heat of fusion ΔH (J/g) measured through DSC and the limiting viscosity [η] (dl/g) measured in a solvent of tetralin at 135°C satisfy the following requirement:

$$\Delta H > 123.1 \times [\eta]^{-0.079} - 4.5.$$

**18.** A method for producing a propylene-based block copolymer, which comprises a step of forming a polypropylene component by polymerizing propylene in the presence of the olefin polymerization catalyst of any of claims 1 to 4, and a step of forming an ethylene/propylene copolymer component by copolymerizing ethylene and propylene still in the presence of the catalyst.

**19.** A propylene-based block copolymer produced in the production method of claim 18.

**20.** The propylene-based block copolymer as claimed in claim 19, of which the peak temperature Y (°C) in the elution curve of the crystalline component obtained in programmed-temperature fractionation and the limiting viscosity [η] (dl/g) of the polypropylene component measured in a solvent of tetralin at 135°C satisfy the following requirement:

$$Y \geq 1.505 \times [\eta] + 116.0.$$

**21.** A method for producing a propylene-based block copolymer, which comprises a step of forming a polypropylene component by polymerizing propylene in the presence of an olefin polymerization catalyst comprising (A) a prepolymerized catalyst component prepared by prepolymerizing an olefin in the presence of (a) a solid catalyst component containing titanium, magnesium, halogen and an electron donor, (b) an organometallic compound and (c) an organosilicon compound having an Si-O-C bonding structure, (B) an organometallic compound, and (C) an organosilicon compound of the following general formula (IV-1), and a step of forming an ethylene/propylene copolymer component by copolymerizing ethylene and propylene still in the presence of the catalyst:

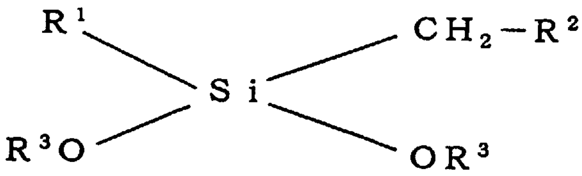

(IV-1)

wherein $R^1$ indicates an alicyclic hydrocarbon group having from 3 to 12 carbon atoms; $R^2$ indicates a branched hydrocarbon group having from 3 to 20 carbon atoms; and $R^3$ indicates a hydrocarbon group having from 1 to 20 carbon atoms.

**22.** The method for producing a propylene-based block copolymer as claimed in claim 21, wherein $R^1$ is a cyclohexyl group or a cyclopentyl group.

**23.** The method for producing a propylene-based block copolymer as claimed in claim 21 or 22, wherein the organosilicon compound of formula (IV-1) is cyclohexylisobutyldimethoxysilane.

**24.** The method for producing a propylene-based block copolymer as claimed in claim 21 or 22, wherein the organosilicon compound of formula (IV-1) is cyclopentylisobutyldimethoxysilane.

**25.** A propylene-based block copolymer obtained in the production method of any of claims 21 to 24.

**26.** The propylene-based block copolymer as claimed in claim 25, of which the peak temperature Y (°C) in the elution curve of the crystalline component obtained in programmed-temperature fractionation and the limiting viscosity [η] (dl/g) of the polypropylene component measured in a solvent of tetralin at 135°C satisfy the following requirement:

$$Y \geq 1.505 \times [\eta] + 116.0.$$

**27.** A method for producing a propylene-ethylene random copolymer, which comprises copolymerizing propylene and ethylene in the presence of the olefin polymerization catalyst of any of claims 1 to 4.

**28.** A propylene-ethylene random copolymer produced in the production method of claim 27.

**29.** The propylene-ethylene random copolymer as claimed in claim 28, of which the 0°C-soluble content $Y_0$ measured in programmed-temperature fractionation is at most 5 % by weight.

**30.** The propylene-ethylene random copolymer as claimed in claim 28 or 29, of which the 0°C-soluble content $Y_0$ (% by weight) measured in programmed-temperature fractionation and the ethylene content X (% by weight) satisfy the following requirement:

$$Y_0 < 0.3734\exp(0.3811X) + 116.0.$$

**31.** A method for producing a propylene-ethylene random copolymer, which comprises copolymerizing propylene and ethylene in the presence of the olefin polymerization catalyst of any of claims 21 to 24.

**32.** A propylene-ethylene random copolymer, of which the 0°C-soluble content $Y_0$ measured in programmed-temperature fractionation is at most 5 % by weight.

**33.** The propylene-ethylene random copolymer as claimed in claim 32, of which the 0°C-soluble content $Y_0$ (% by weight) measured in programmed-temperature fractionation and the ethylene content X (% by weight) satisfy the following requirement:

$$Y_0 < 0.3734\exp(0.3811X) + 116.0.$$

**34.** The propylene-ethylene random copolymer as claimed in claim 32 or 33, which is produced in the production method of claim 31.